# EUROPEAN PATENT APPLICATION

(11) **EP 4 711 071 A1**
(43) Date of publication of application: **18.03.2026**
(21) Application number: 23963040.3
(22) Date of filing: 26.12.2023
(51) Int. Cl.: B23K 26/16, B23K 26/70

(54) **METHOD FOR DESIGNING CONVEYANCE PLATE FOR DROSS CONVEYANCE AND METHOD FOR MANUFACTURING DROSS CONVEYANCE CONVEYOR**

(71) Applicant: Yamazaki Mazak Corporation, Niwa-gun, Aichi 480-0197 (JP)
(72) Inventor: MICHINAKA, Kengo, Niwa-gun, Aichi 480-0197 (JP); KOBAYASHI, Yoji, Niwa-gun, Aichi 480-0197 (JP); SASAKI, Satoshi, Niwa-gun, Aichi 480-0197 (JP); TAHARA, Makoto, Niwa-gun, Aichi 480-0197 (JP)
(74) Representative: TBK
(86) International application number: PCT/JP2023/046606
(87) International publication number: WO 2025/141684

(57) **Abstract**

A method for designing a transportation plate for transporting dross includes the steps of: acquiring a basic deflection amount, in a case where a model plate is defined as a basic model of the transportation plate that transports the dross generated by irradiation of a laser beam on a workpiece from a laser beam machine apparatus and the basic deflection amount is defined as an amount of deflection of the model plate, the deflection occurring due to irradiation of a first laser beam on the model plate; and designing the transportation plate based on the model plate for a first deflection amount to be smaller than the basic deflection amount, in a case where the first deflection amount is defined as an amount of deflection of the transportation plate, the deflection occurring due to the irradiation of the first laser beam on the transportation plate under a substantially identical condition to a condition for the irradiation of the first laser beam on the model plate.

## Description

### Technical Field

The present invention relates to a method for designing a transportation plate for transporting dross, and a method for producing a dross transportation conveyor.

### Background Art

A laser beam machine including a chip conveyor is known.

As a related art, Patent Literature 1 discloses a chip conveyor of a laser beam machine. The chip conveyor described in Patent Literature 1 includes a large number of plates that constitute a conveyor belt. Each plate is bendably coupled to another plate by a joint.

### Citation List

### Patent Literature

PTL1: Microfilm of JP Utility Model Application No. H03-19091 (published as JP H04-108984 U)

### Summary of Invention

### Technical Problem

It is an object of the present invention to provide a method for designing a transportation plate for transporting dross and a method for producing a dross transportation conveyor that reduce a thermal deformation amount or a compressive plastic strain amount in a transportation plate.

### Solution to Problem

A method for designing a transportation plate for transporting dross, according to some embodiments, includes the steps of: acquiring a basic deflection amount, in a case where a model plate is defined as a basic model of the transportation plate that transports the dross generated by irradiation of a laser beam on a workpiece from a laser beam machine apparatus and the basic deflection amount is defined as an amount of deflection of the model plate, the deflection occurring due to irradiation of a first laser beam on the model plate; and designing the transportation plate based on the model plate for a first deflection amount to be smaller than the basic deflection amount, in a case where the first deflection amount is defined as an amount of deflection of the transportation plate, the deflection occurring due to the irradiation of the first laser beam on the transportation plate under a substantially identical condition to a condition for the irradiation of the first laser beam on the model plate.

A method for producing a dross transportation conveyor, according to some embodiments, includes the steps of: acquiring a basic deflection amount, in a case where a model plate is defined as a basic model of the transportation plate that transports the dross generated by irradiation of a laser beam on a workpiece from a laser beam machine apparatus and the basic deflection amount is defined as an amount of deflection of the model plate, the deflection occurring due to irradiation of a first laser beam on the model plate; designing the transportation plate based on the model plate for a first deflection amount to be smaller than the basic deflection amount, in a case where the first deflection amount is defined as an amount of deflection of the transportation plate, the deflection occurring due to the irradiation of the first laser beam on the transportation plate under a substantially identical condition to a condition for the irradiation of the first laser beam on the model plate; producing the transportation plate that has been designed; and producing a conveyor apparatus comprising a transportation body in which a group of transportation plates comprising the transportation plate is assembled together.

### Effects of Invention

The present invention provides a method for designing a transportation plate for transporting dross and a method for producing a dross transportation conveyor that reduce a thermal deformation amount or a compressive plastic strain amount in a transportation plate.

### Brief Description of Drawings

[FIG. 1] FIG. 1 is a schematic cross-sectional view of a state in which a workpiece is machined by a laser beam irradiated from a laser head of a laser beam irradiator, schematically illustrating the state.
[FIG. 2] FIG. 2 is a schematic cross-sectional view of a part of a laser beam machine apparatus in a comparative example, schematically illustrating the part.
[FIG. 3] FIG. 3 is a schematic cross-sectional view of an example of a model plate, schematically illustrating the example.
[FIG. 4] FIG. 4 is a schematic perspective view of a state in which the model plate is irradiated with a first laser beam, schematically illustrating the state.
[FIG. 5] FIG. 5 is a schematic perspective view of a state in which the model plate is deflected due to compressive plastic strain, schematically illustrating the state.
[FIG. 6] FIG. 6 is a schematic front view of a state in which a basic deflection amount is actually measured, schematically illustrating the state.
[FIG. 7] FIG. 7 is a schematic perspective view of a state in which a plurality of portions of the model plate are irradiated with the first laser beam, schematically illustrating the state.
[FIG. 8] FIG. 8 is a schematic perspective view of an example of a transportation plate that has been designed, schematically illustrating the example.
[FIG. 9] FIG. 9 is a schematic perspective view of a state in which the transportation plate is irradiated with the first laser beam, schematically illustrating the state.
[FIG. 10] FIG. 10 is a schematic perspective view of a state in which the transportation plate is deflected due to the compressive plastic strain, schematically illustrating the state.
[FIG. 11] FIG. 11 is a schematic perspective view of a state in which a plurality of portions of the transportation plate are irradiated with the first laser beam, schematically illustrating the state.
[FIG. 12] FIG. 12 is a flowchart of an example of a method for designing a transportation plate for transporting dross according to a first embodiment.
[FIG. 13] FIG. 13 is a schematic perspective view of an example of the model plate, schematically illustrating the example.
[FIG. 14] FIG. 14 is a schematic perspective view of a state in which a first portion of the model plate and a second portion of the model plate are irradiated with the first laser beam, schematically illustrating the state.
[FIG. 15] FIG. 15 is a schematic perspective view of a state in which a first portion of a first model plate and a second portion of a second model plate are irradiated with the first laser beam, schematically illustrating the state.
[FIG. 16] FIG. 16 is a schematic front view of a state in which the model plate is deflected due to irradiation of the first laser beam on the first portion of the model plate, schematically illustrating the model plate.
[FIG. 17] FIG. 17 is a schematic front view of a state in which the model plate is deflected due to the irradiation of the first laser beam on the second portion of the model plate, schematically illustrating the state.
[FIG. 18] FIG. 18 is a schematic illustration of a state in which the basic deflection amount is determined, based on at least data indicating the first deflection of the model plate and data indicating the second deflection of the model plate.
[FIG. 19] FIG. 19 is a schematic perspective view of an example of the transportation plate that has been designed, schematically illustrating the example.
[FIG. 20] FIG. 20 is a schematic front view of a state in which the transportation plate is deflected due to the irradiation of the first laser beam on a third portion of the transportation plate, schematically illustrating the state.
[FIG. 21] FIG. 21 is a schematic front view of a state in which the transportation plate is deflected due to the irradiation of the first laser beam on a fourth portion of the transportation plate, schematically illustrating the state.
[FIG. 22] FIG. 22 is a schematic illustration of a state in which the basic deflection amount is determined, based on at least the data indicating the first deflection of the model plate and the data indicating the second deflection of the model plate.
[FIG. 23] FIG. 23 is a schematic perspective view of an example of the model plate, schematically illustrating the example.
[FIG. 24] FIG. 24 is a schematic perspective view of another example of the model plate, schematically illustrating another example.
[FIG. 25] FIG. 25 is a schematic illustration of a state in which the first deflection amount is determined, based on at least data indicating the third deflection of the transportation plate.
[FIG. 26] FIG. 26 is a schematic illustration of a state in which the first deflection amount is determined, based on at least the data indicating the third deflection of the transportation plate and data indicating the fourth deflection of the transportation plate.
[FIG. 27] FIG. 27 is a schematic perspective view of an example of the transportation plate that has been designed, schematically illustrating the example.
[FIG. 28] FIG. 28 is a schematic perspective view of an example of the transportation plate that has been designed, schematically illustrating the example.
[FIG. 29] FIG. 29 is a schematic perspective view of an example of the transportation plate that has been designed, schematically illustrating the example.
[FIG. 30] FIG. 30 is a schematic perspective view of an example of the transportation plate that has been designed, schematically illustrating the example.
[FIG. 31] FIG. 31 is a schematic perspective view of an example of the transportation plate that has been designed, schematically illustrating the example.
[FIG. 32] FIG. 32 is a schematic perspective view of an example of the transportation plate that has been designed, schematically illustrating the example.
[FIG. 33] FIG. 33 is a schematic perspective view of an example of the transportation plate that has been designed, schematically illustrating the example.
[FIG. 34] FIG. 34 is a schematic perspective view of an example of the transportation plate that has been designed, schematically illustrating the example.
[FIG. 35] FIG. 35 is a schematic perspective view of an example of the transportation plate that has been designed, schematically illustrating the example.
[FIG. 36] FIG. 36 is a schematic perspective view of an example of the transportation plate that has been designed, schematically illustrating the example.
[FIG. 37] FIG. 37 is a schematic perspective view of an example of a dross transportation conveyor that has been produced, schematically illustrating the example.
[FIG. 38] FIG. 38 is a schematic cross-sectional view of a part of a transportation body, schematically illustrating the part.
[FIG. 39] FIG. 39 is a schematic perspective view of a state in which a group of transportation plates including the transportation plate and a second transportation plate is movable along a circling orbit, schematically illustrating the state.
[FIG. 40] FIG. 40 is a schematic perspective view of a state in which a plurality of transportation plates, which are hinge-coupled to each other, are movable along the circling orbit, schematically illustrating the state.
[FIG. 41] FIG. 41 is an exploded perspective view of a part of the transportation body, schematically illustrating the part.
[FIG. 42] FIG. 42 is a schematic cross-sectional view of a state in which the conveyor apparatus is incorporated in a laser beam machine apparatus, schematically illustrating the state.
[FIG. 43] FIG. 43 is a flowchart of an example of a method for producing a dross transportation conveyor according to a second embodiment.

### Description of Embodiments

Hereinafter, by referring to the accompanying drawings, description will be made with regard to a method for designing a transportation plate for transporting dross, and a method for producing a dross transportation conveyor according to embodiments. It is noted that in the following description of the embodiments, identical reference numerals are used to denote identical portions, members, or components having identical functions, and redundant description of identical portions, members, or components will be omitted.

### (Definition of Terms)

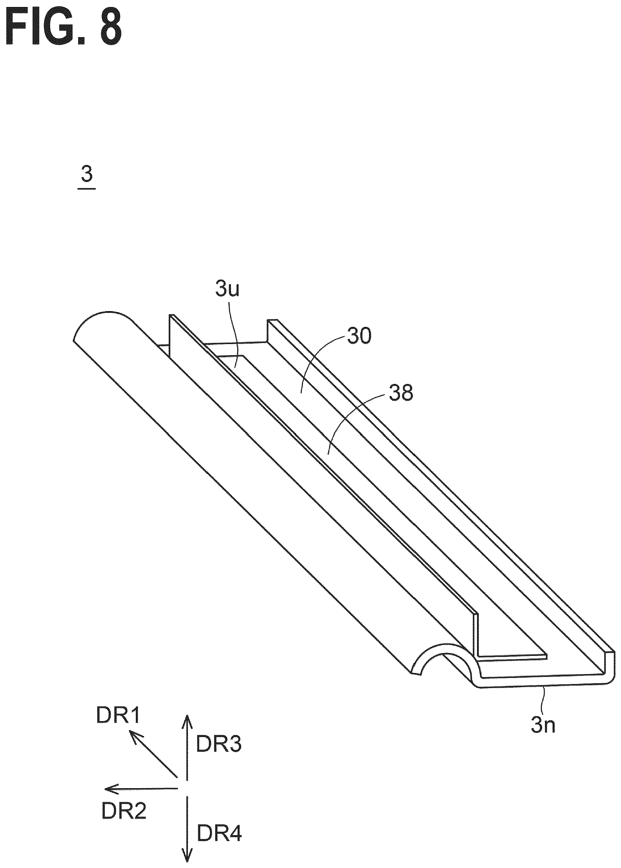

As illustrated in FIG. 8, a transportation plate 3 has a transportation surface 3u. Herein, the transportation surface of the transportation plate means a surface that supports dross at the time of transporting the dross. More specifically, the transportation surface 3u of the transportation plate 3 is a surface that faces substantially upward when the transportation plate 3 transports the dross.

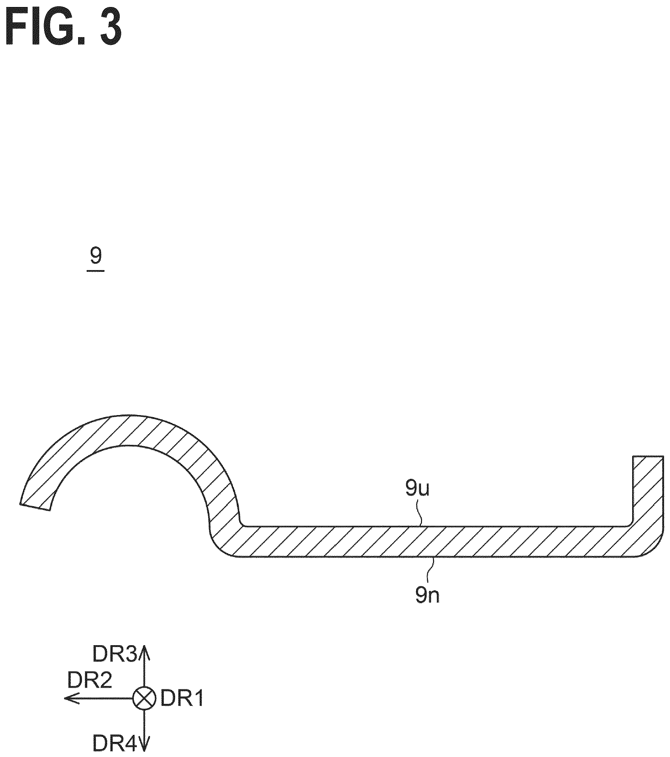

As illustrated in FIG. 3, a model plate 9 has a transportation surface 9u. Herein, assuming that the model plate transports the dross, the transportation surface of the model plate means a surface assumed to support the dross.

As illustrated in FIG. 8, the transportation plate 3 has a back surface 3n. Herein, the back surface of the transportation plate means a surface at an opposite end of the transportation surface 3u of the transportation plate 3. More specifically, the back surface 3n of the transportation plate 3 is a surface that faces substantially downward when the transportation plate 3 transports the dross.

As illustrated in FIG. 3, the model plate 9 has a back surface 9n. Herein, the back surface of the model plate means a surface at an opposite end of the transportation surface 9u of the model plate 9. More specifically, assuming that the model plate 9 transports the dross, the back surface 9n of the model plate 9 is a surface that faces substantially downward when the model plate 9 transports the dross.

### (Definition of Directions)

As illustrated in FIG. 8, herein, the extending direction of the transportation plate 3 is defined as a first direction DR1. Also, as illustrated in FIG. 3, the extending direction of the model plate 9 is defined as the first direction DR1.

Herein, the moving direction of the transportation plate 3 at the time of transporting the dross is defined as a second direction DR2. In addition, assuming that the model plate 9 transports the dross, the moving direction of the model plate 9 at the time of transporting the dross is defined as the second direction DR2.

As illustrated in FIG. 8, herein, a direction from the back surface 3n of the transportation plate 3 toward the transportation surface 3u of the transportation plate 3 is defined as a third direction DR3. Also, as illustrated in FIG. 3, a direction from the back surface 9n of the model plate 9 toward the transportation surface 9u of the model plate 9 is defined as the third direction DR3. Herein, a direction from the transportation surface 3u of the transportation plate 3 toward the back surface 3n of the transportation plate 3 is defined as a fourth direction DR4. In addition, a direction from the transportation surface 9u of the model plate 9 toward the back surface 9n of the model plate 9 is defined as the fourth direction DR4. The fourth direction DR4 is a direction opposite to the third direction DR3.

### (First Embodiment)

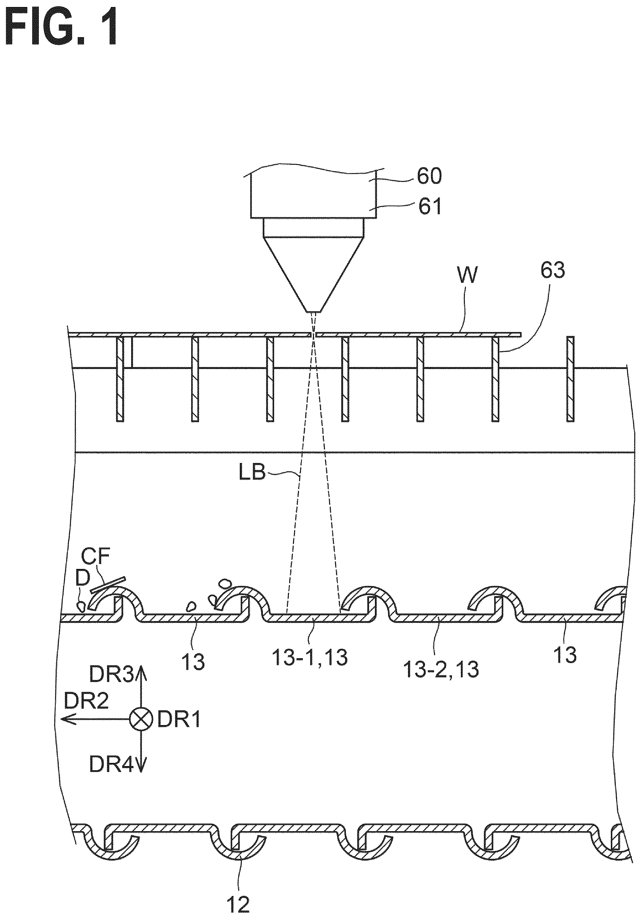

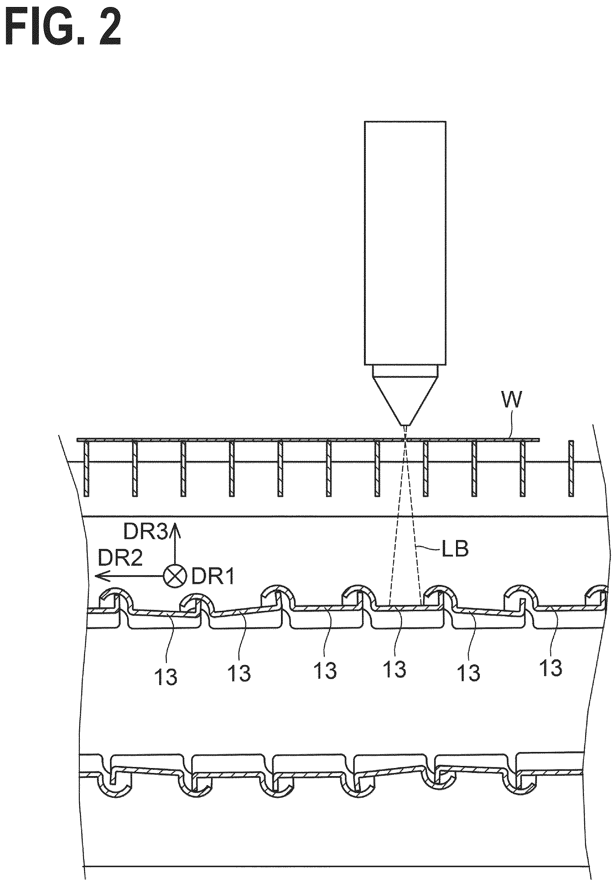

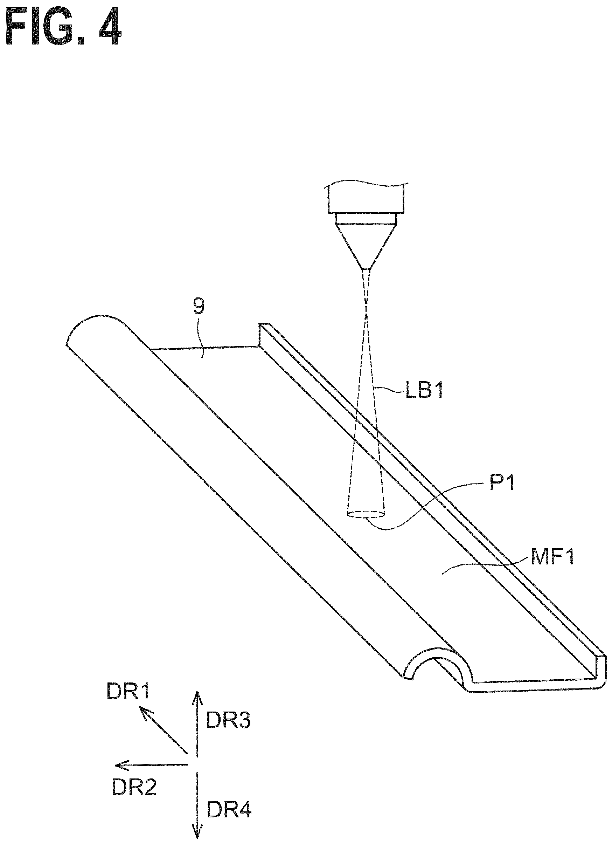

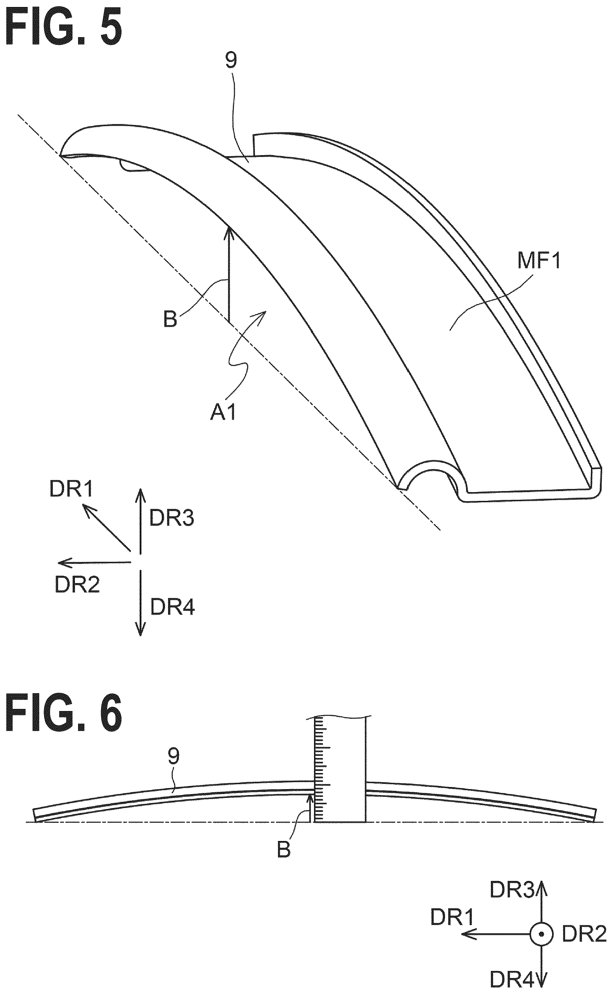

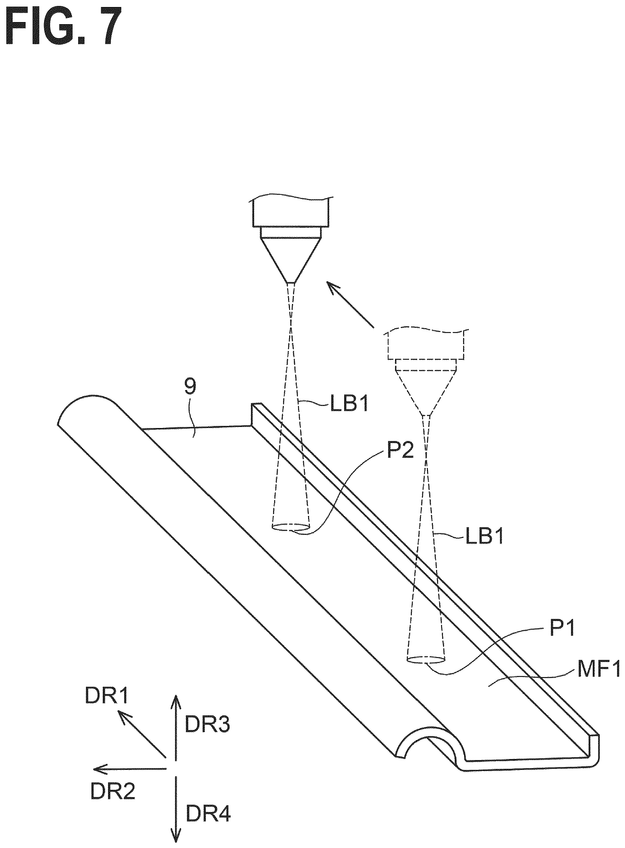

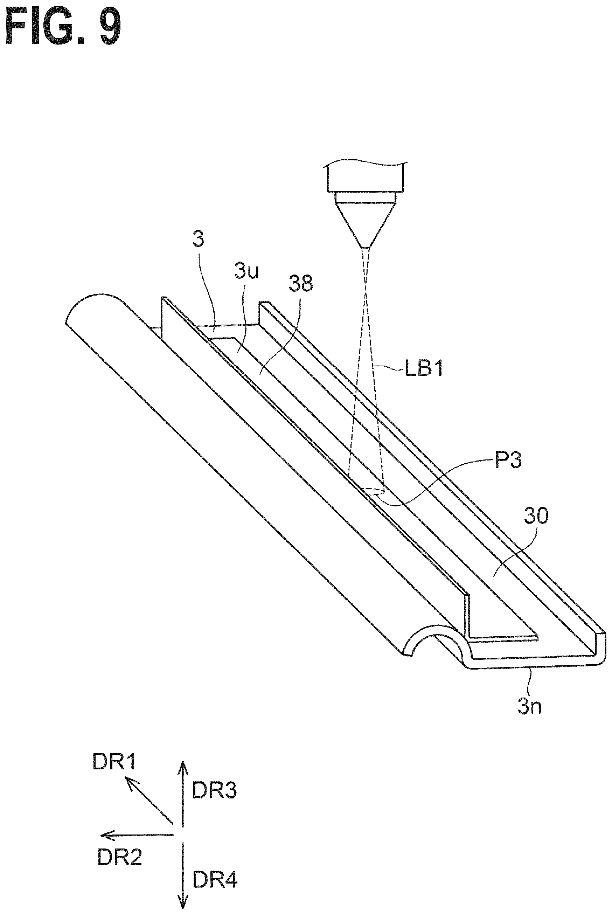

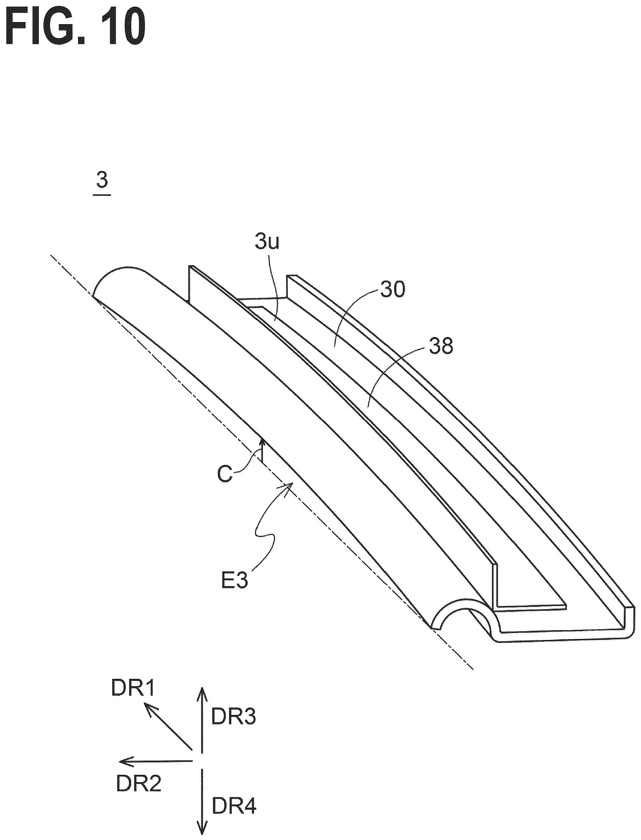

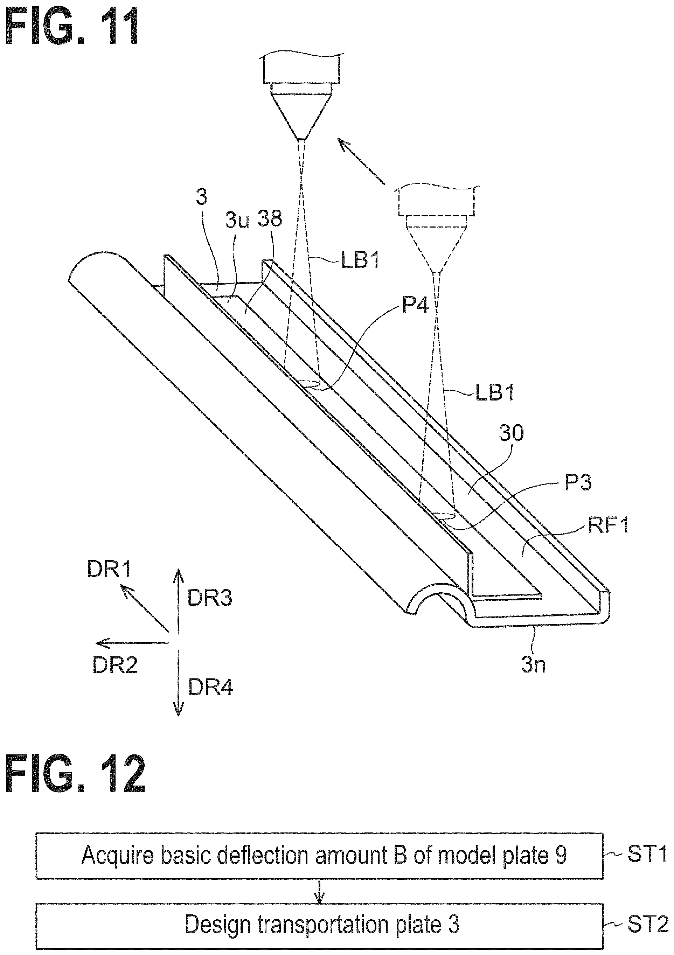

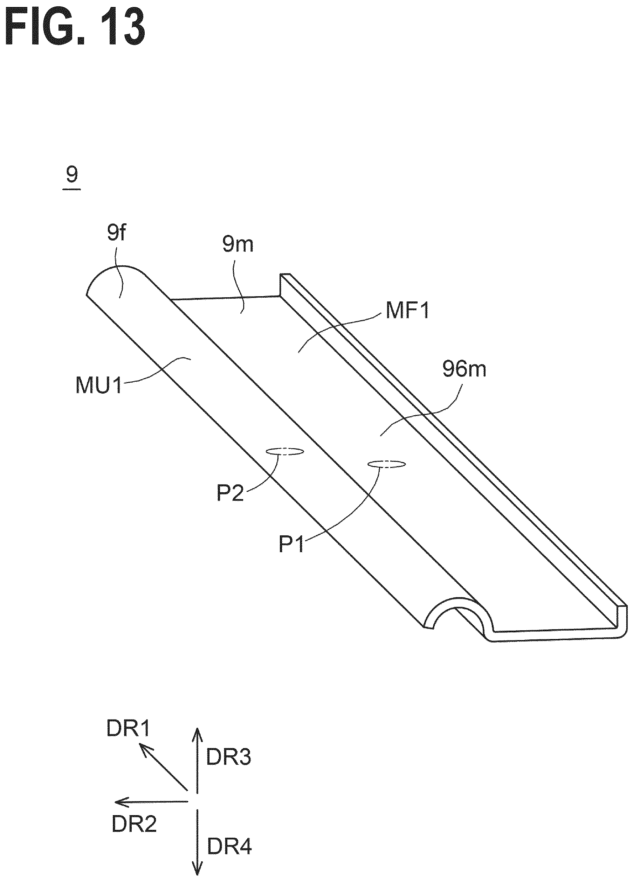

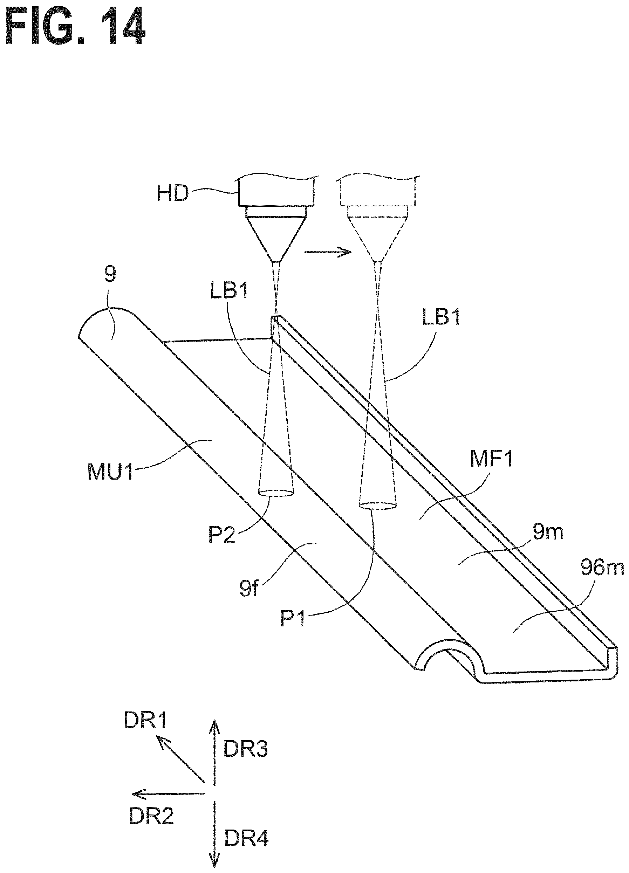

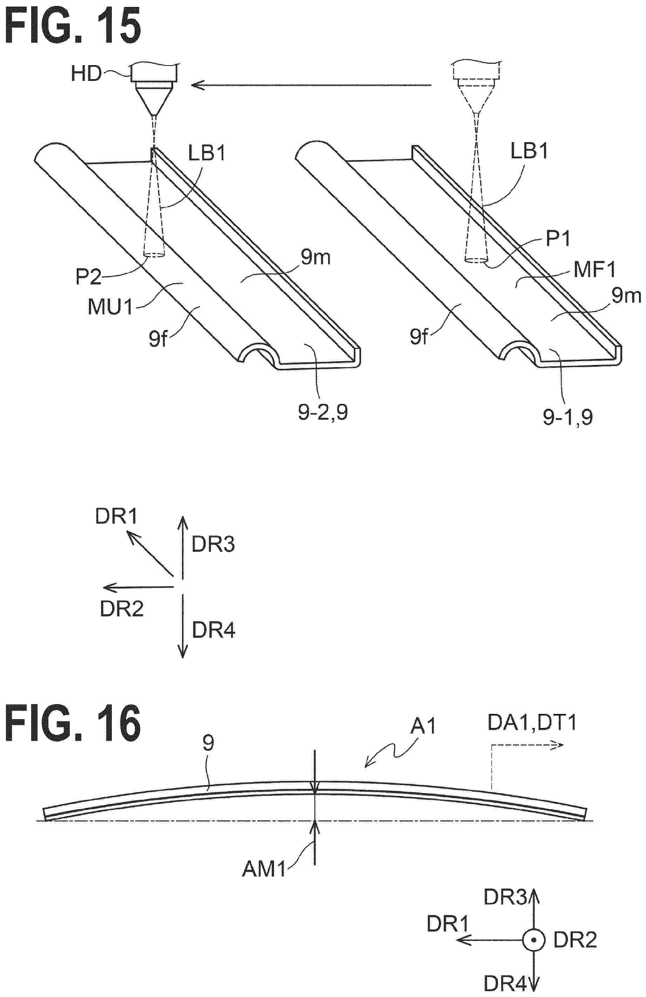

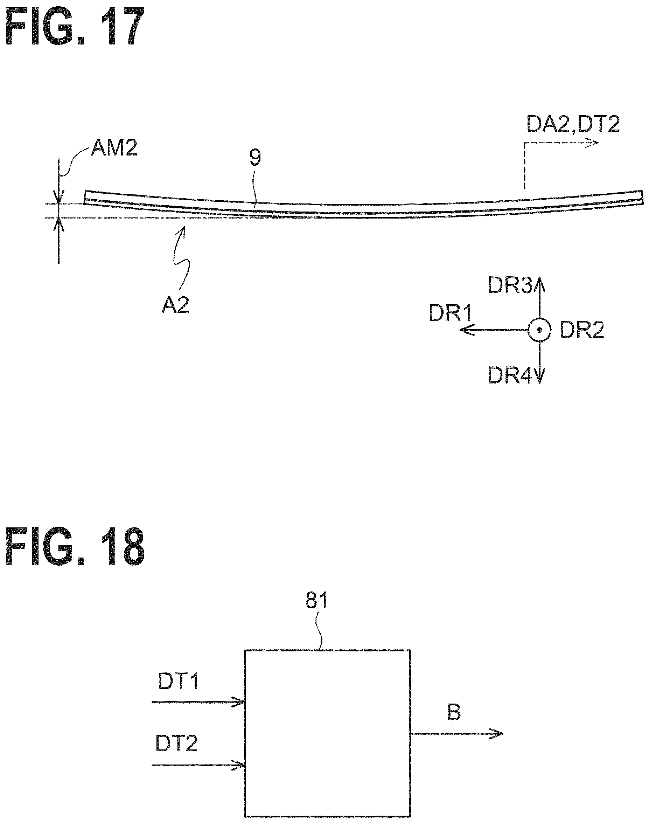

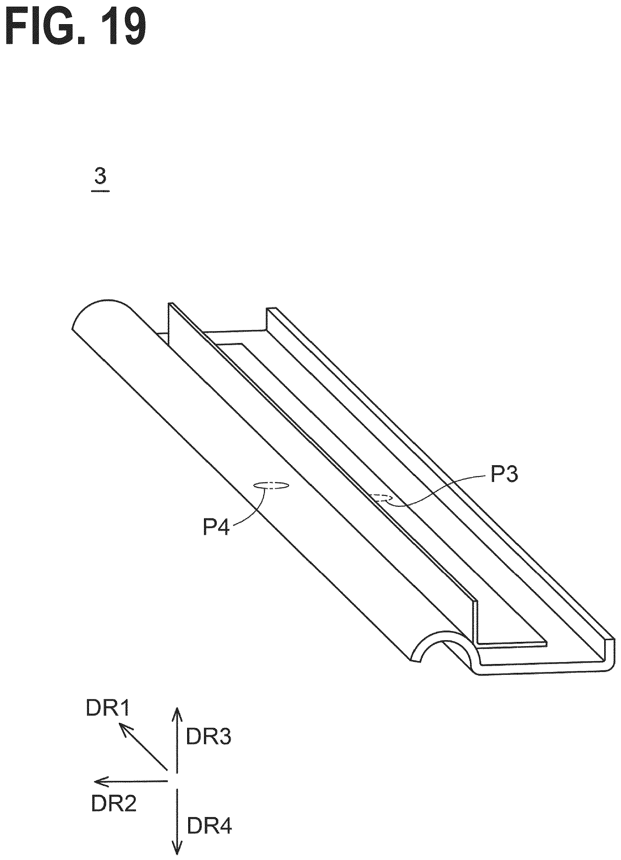

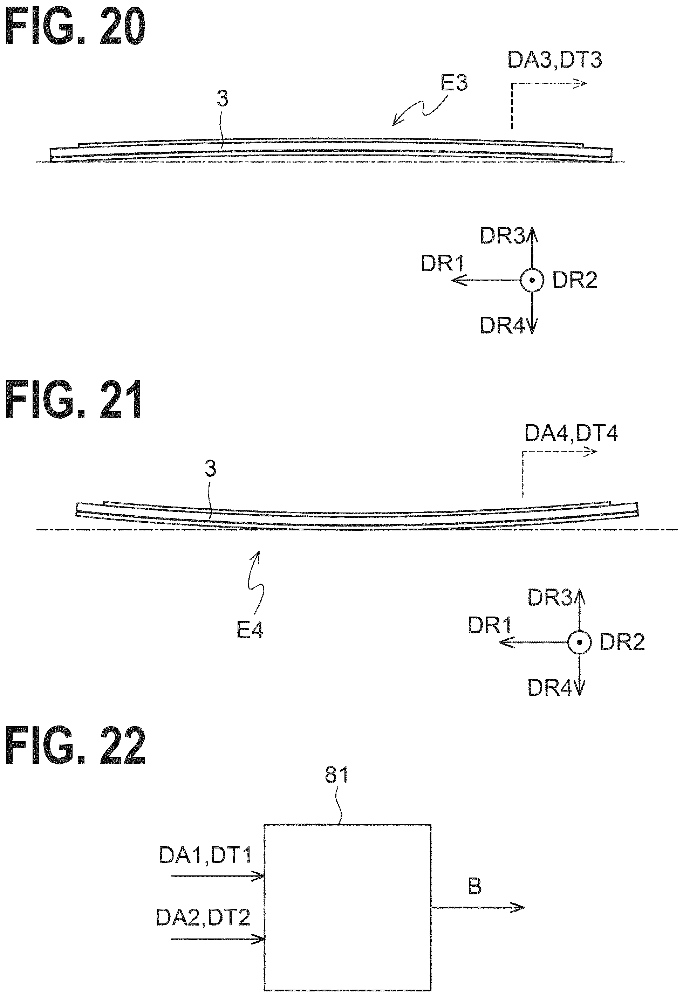

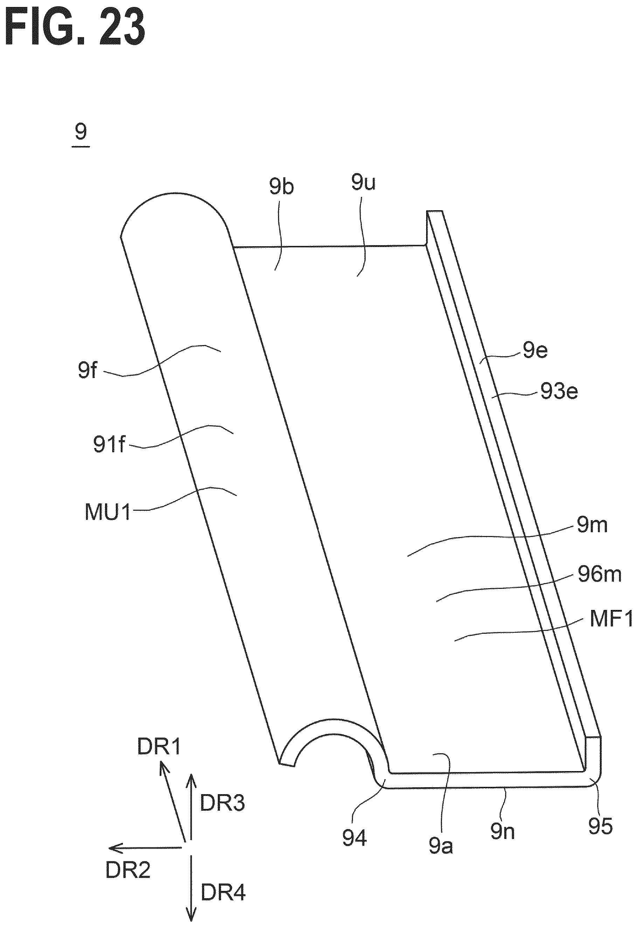

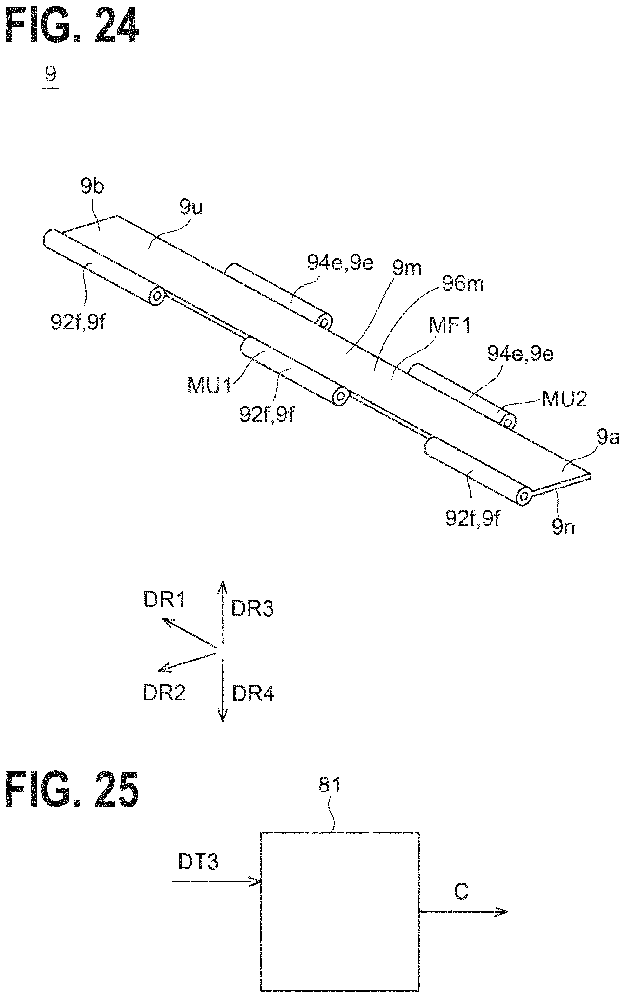

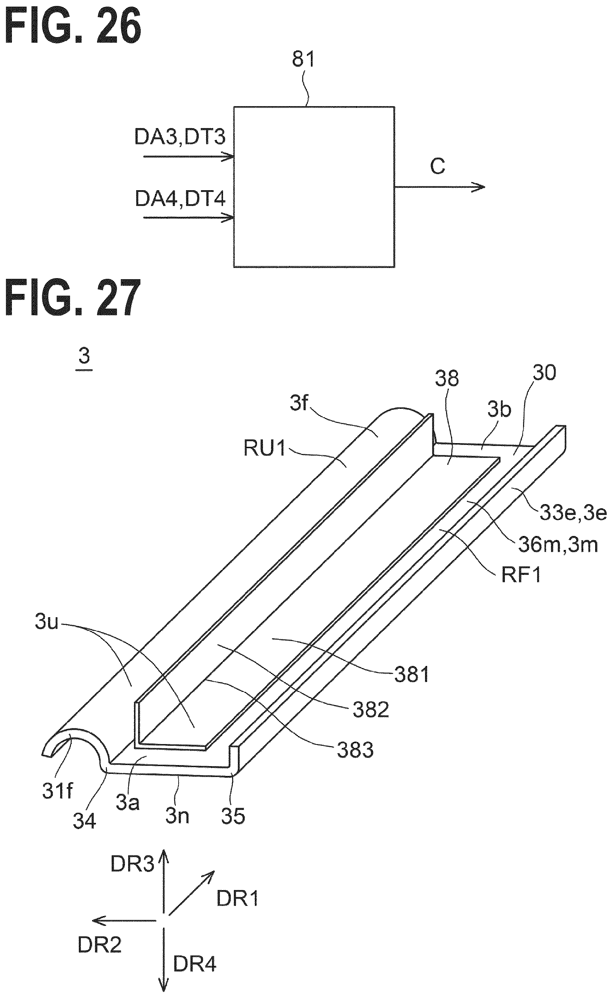

Referring to FIGs. 1 to 36, a method for designing a transportation plate for transporting dross according to a first embodiment will be described. FIG. 1 is a schematic cross-sectional view of a state in which a workpiece W is machined by a laser beam LB irradiated from a laser head 61 of a laser beam irradiator 60, schematically illustrating the state. FIG. 2 is a schematic cross-sectional view of a part of a laser beam machine apparatus in a comparative example, schematically illustrating the part. FIG. 3 is a schematic cross-sectional view of an example of the model plate 9, schematically illustrating the example. FIG. 4 is a schematic perspective view of a state in which the model plate 9 is irradiated with a first laser beam LB1, schematically illustrating the state. FIG. 5 is a schematic perspective view of a state in which the model plate 9 is deflected due to compressive plastic strain, schematically illustrating the state. FIG. 6 is a schematic front view of a state in which a basic deflection amount B is actually measured, schematically illustrating the state. FIG. 7 is a schematic perspective view of a state in which a plurality of portions of the model plate 9 are irradiated with the first laser beam LB1, schematically illustrating the state. FIG. 8 is a schematic perspective view of an example of the transportation plate 3 that has been designed, schematically illustrating the example. FIG. 9 is a schematic perspective view of a state in which the transportation plate 3 is irradiated with the first laser beam LB1, schematically illustrating the state. FIG. 10 is a schematic perspective view of a state in which the transportation plate 3 is deflected due to the compressive plastic strain, schematically illustrating the state. FIG. 11 is a schematic perspective view of a state in which a plurality of portions of the transportation plate 3 are irradiated with the first laser beam LB1, schematically illustrating the state. FIG. 12 is a flowchart of an example of the method for designing the transportation plate for transporting the dross according to the first embodiment. FIG. 13 is a schematic perspective view of an example of the model plate 9, schematically illustrating the example. FIG. 14 is a schematic perspective view of a state in which a first portion P1 of the model plate 9 and a second portion P2 of the model plate 9 are irradiated with the first laser beam LB1, schematically illustrating the state. FIG. 15 is a schematic perspective view of a state in which a first portion P1 of a first model plate 9-1 and a second portion P2 of a second model plate 9-2 are irradiated with the first laser beam LB1, schematically illustrating the state. FIG. 16 is a schematic front view of a state in which the model plate 9 is deflected due to irradiation of the first laser beam LB1 on the first portion P1 of the model plate 9, schematically illustrating the model plate 9. FIG. 17 is a schematic front view of a state in which the model plate 9 is deflected due to the irradiation of the first laser beam LB1 on the second portion P2 of the model plate 9, schematically illustrating the state. FIG. 18 is a schematic illustration of a state in which the basic deflection amount B is determined, based on at least data DT1 indicating the first deflection A1 of the model plate 9 and data DT2 indicating the second deflection A2 of the model plate 9. FIG. 19 is a schematic perspective view of an example of the transportation plate 3 that has been designed, schematically illustrating the example. FIG. 20 is a schematic front view of a state in which the transportation plate 3 is deflected due to the irradiation of the first laser beam LB1 on a third portion P3 of the transportation plate 3, schematically illustrating the state. FIG. 21 is a schematic front view of a state in which the transportation plate 3 is deflected due to the irradiation of the first laser beam LB1 on a fourth portion P4 of the transportation plate 3, schematically illustrating the state. FIG. 22 is a schematic illustration of a state in which the basic deflection amount B is determined, based on at least the data DT1 indicating the first deflection A1 of the model plate 9 and the data DT2 indicating the second deflection A2 of the model plate 9. FIG. 23 is a schematic perspective view of an example of the model plate 9, schematically illustrating the example. FIG. 24 is a schematic perspective view of another example of the model plate 9, schematically illustrating another example. FIG. 25 is a schematic illustration of a state in which a first deflection amount C is determined, based on at least data DT3 indicating the third deflection E3 of the transportation plate 3. FIG. 26 is a schematic illustration of a state in which the first deflection amount C is determined, based on at least the data DT3 indicating the third deflection E3 of the transportation plate 3 and data DT4 indicating the fourth deflection E4 of the transportation plate 3. FIGs. 27 to 36 are each a schematic perspective view of an example of the transportation plate 3 that has been designed, schematically illustrating the example.

### (Example of Dross Transportation Conveyor 12)

As illustrated in FIG. 1, a dross transportation conveyor 12 includes a group of transportation plates 13. The group of transportation plates 13 transports the dross D generated by irradiating a workpiece W (for example, a plate-shaped workpiece) with a laser beam LB. The group of transportation plates 13 may transport, in addition to the dross D, cut-off pieces CF, which are generated by irradiating the workpiece W with the laser beam LB.

It is to be noted that herein, the dross means a lump having an irregular shape (in other words, a lump having a random shape) formed by solidification of a material (more specifically, a metal material) melted by irradiation of the laser beam.

The group of transportation plates 13 includes a first transportation plate 13-1, which extends in the first direction DR1, and a second transportation plate 13-2, which extends in the first direction DR1. Each transportation plate 13 in the group of transportation plates 13 is an elongated plate, a longitudinal direction of which is the first direction DR1. In an example illustrated in FIG. 1, the second transportation plate 13-2 is disposed to be adjacent to the first transportation plate 13-1.

In an example illustrated in FIG. 1, the laser beam LB that passes through the workpiece W reaches a dross transportation conveyor 12. As illustrated in FIG. 2, when the laser beam LB reaches the transportation plate 13, the transportation plate 13 is thermally deformed. In an example illustrated in FIG. 2, due to the laser beam LB reaching each of the plurality of transportation plates 13, the plurality of transportation plates 13 are irregularly deflected in the third direction DR3 (more specifically, deflected due to thermal deformation). The transportation plate 13 is designed to prevent excessive deflection, and has sufficient resistance to the thermal deformation. In particular, the transportation plate 13 having a shape as illustrated in FIG. 2 has high bending rigidity, and is not easily deflected. However, if the output of the laser beam LB is further increased or the energy density of the laser beam LB is further increased, the thermal deformation may become excessive even though the transportation plate 13 has the shape as illustrated in FIG. 2. In addition, if the thermal deformation of the transportation plate 13 becomes excessive, smooth movement of the group of transportation plates 13 may be hindered.

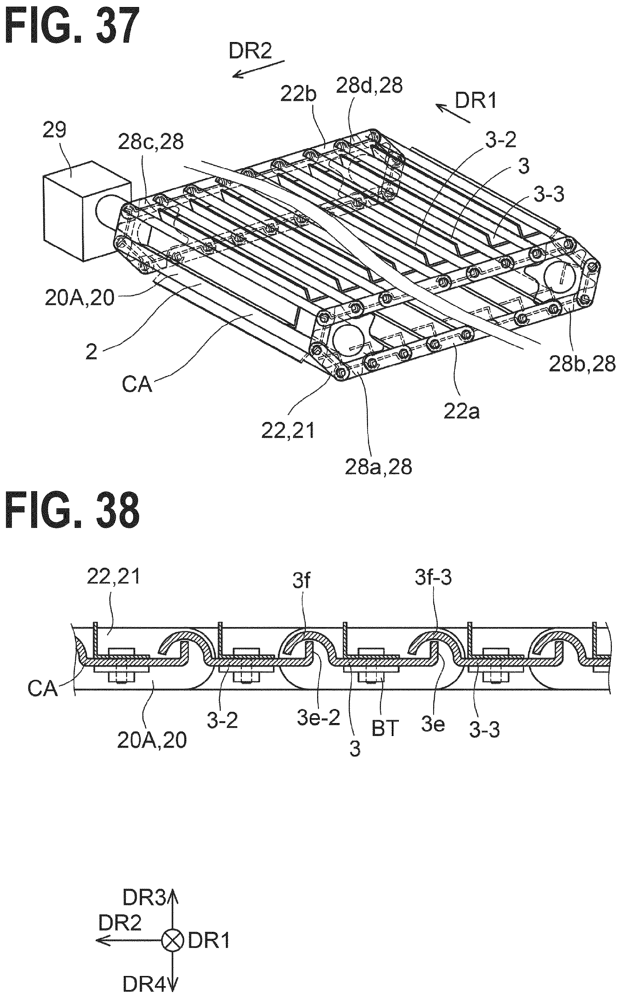

In the method for designing the transportation plate for transporting the dross according to the first embodiment, the transportation plate 3 (for example, see FIG. 8) is designed to reduce the amount of the above-described thermal deformation or the amount of compressive plastic strain due to the thermal deformation. A plurality of designed transportation plates 3 are produced, and the plurality of transportation plates that have been produced and other members are assembled together to produce a transportation body CA (see FIG. 37) in a conveyor apparatus 20.

Herein, a model plate is defined as a basic model of the transportation plate that transports the dross generated by irradiating a workpiece with a laser from a laser beam machine apparatus. FIG. 3 illustrates an example of the model plate 9, which is the basic model of the transportation plate. The model plate 9 may be obtained by modeling a transportation plate that has been adopted in a dross transportation conveyor that has been produced in the past. Alternatively, the model plate 9 may also be of a new basic design.

As illustrated in FIG. 4, a case where the model plate 9 is irradiated with a first laser beam LB1 is assumed. It is to be noted that in order to distinguish the laser beam LB irradiated on the workpiece W (see FIG. 1) from the laser beam irradiated on the model plate 9 or the transportation plate 3 without being irradiated on the workpiece W, the latter laser beam will be referred to as a "first laser beam LB1". In addition, herein, in a simulation, a laser beam virtually irradiated on the model plate 9 or the transportation plate 3 will also be referred to as the "first laser beam LB 1".

As illustrated in FIG. 4, when the model plate 9 is irradiated with the first laser beam LB1, the temperature of the model plate 9 is increased and the model plate 9 is thermally deformed. In addition, in a case where large thermal deformation occurs locally in the model plate 9, compression stress that exceeds yield stress is locally exerted on the model plate 9. Then, when the temperature of the model plate 9 is lowered to a normal temperature (for example, approximately 20 degrees Celsius), compressive plastic strain occurs in a part on which the compression stress that exceeds the yield stress has been exerted. Due to such compressive plastic strain, the model plate 9 is deflected in the third direction DR3 or the fourth direction DR4 (see FIG. 5). It is to be noted that in FIG. 5, the deflection amount of the model plate 9 is illustrated in an emphasized manner, as compared with the actual deflection amount, and in FIG. 10, the deflection amount of the transportation plate 3 is illustrated in an emphasized manner, as compared with the actual deflection amount. Also in the other drawings, the deflection amount of the model plate 9 or the transportation plate 3 is illustrated in an emphasized manner, as compared with the actual deflection amount.

Herein, a basic deflection amount B is defined as an amount of deflection (for example, an amount of deflection at the time of the thermal deformation or an amount of deflection that occurs due to the compressive plastic strain) of the model plate 9, the deflection occurring due to irradiation on the model plate 9 with the first laser beam LB1 (for example, the first laser beam emitted from the laser beam machine apparatus 6 or the first laser beam emitted from an apparatus that simulates the laser beam machine apparatus 6).

In the method for designing the transportation plate for transporting the dross according to the first embodiment, the above-described basic deflection amount B is acquired through simulation or experiment in a first step ST1. The first step ST1 is a deflection amount acquisition process.

The deflection amount acquisition process (the first step ST1) may include: (1) actually irradiating the model plate 9 with the first laser beam LB1 (see FIG. 4); and (2) actually measuring the amount of deflection of the model plate 9, the deflection occurring due to irradiation of the first laser beam LB1 on the model plate 9 (see FIG. 6). In this case, the basic deflection amount B is acquired, based on the actual measured deflection amount of the model plate 9. The actual measured deflection amount of the model plate 9 may be set as the basic deflection amount B. It is to be noted that the basic deflection amount B may be an average value of a plurality of actual measurements. For example, actually irradiating the model plate 9 with the first laser beam LB1 and actually measuring the amount of deflection of the model plate 9, the deflection occurring due to the irradiation of the first laser beam LB1 on the model plate 9, may be performed for a plurality of model plates 9. In this case, an average of a plurality of actual measured values of the deflection amounts of the model plates 9 may be set as the basic deflection amount B.

In addition, the irradiation of the first laser beam LB1 on the model plate 9 may include: (1) actually irradiating a first portion P1 of the model plate 9 with the first laser beam LB1 (see FIG. 7); and (2) actually irradiating a second portion P2 of the model plate 9 with the first laser beam LB1, and the second portion P2 is different from the first portion P1 (see FIG. 7). In this case, the deflection amount acquisition process (the first step ST1) may include actually measuring the amount of deflection of the model plate 9, the deflection occurring due to the irradiation of the first laser beam LB1 on a plurality of portions including the first portion P1 and the second portion P2. In addition, the actual measured value of the amount of deflection of the model plate 9, the deflection occurring due to the irradiation of the first laser beam LB1 on the plurality of portions including the first portion P1 and the second portion P2, may be set as the basic deflection amount B.

In an example illustrated in FIG. 7, the second portion P2 is a portion further in the first direction DR1 than the first portion P1. In addition, a straight line that connects the center of the second portion P2 with the center of the first portion P1 is substantially parallel to the first direction DR1. Further, in the example illustrated in FIG. 7, the second portion P2 is a portion spaced apart from the first portion P1.

In the example illustrated in FIG. 7, irradiating the model plate 9 with the first laser beam LB1 includes actually irradiating two positions of the model plate 9 with the first laser beam LB1 in the direction along the first direction DR1. Irradiating the model plate 9 with the first laser beam LB1 may include actually irradiating three or more positions of the model plate 9 with the first laser beam LB1 in the direction along the first direction DR1.

The deflection amount of the model plate 9 may be actually measured manually using a measuring instrument (for example, a ruler), as illustrated in FIG. 6. Alternatively, the deflection amount of the model plate 9 may be actually measured by using a deflection measuring apparatus that mechanically or optically measures the deflection amount. Any known measuring means is adoptable as a means for actually measuring the deflection amount of the model plate 9. Since the actual measurement of the deflection amount of the plate is a common technique, detailed description of the actual measurement of the deflection amount will be omitted herein.

Alternatively, the deflection amount acquisition process (the first step ST1) may include acquiring the basic deflection amount B through simulation using a computer. For example, the deflection amount acquisition process (the first step ST1) includes deriving, through simulation, the amount of the deflection of the model plate 9, the deflection occurring due to virtual irradiation of the first laser beam LB1 on the model plate 9. As an initial condition that the model plate 9 is irradiated with the first laser beam LB1, a thermal profile of the model plate 9, a stress profile of the model plate 9, a strain profile of the model plate 9, and the basic deflection amount B of the model plate 9 may be derived by a computer. The thermal distribution of the model plate 9, the stress distribution of the model plate 9, the strain distribution of the model plate 9, and the basic deflection amount B of the model plate 9 may be acquired by causing a computer to execute finite element method analysis software.

In the simulation, a plurality of portions of the model plate 9 may be virtually irradiated with the first laser beam LB1. Similarly to the example illustrated in FIG. 7, irradiating the model plate 9 with the first laser beam LB1 in the simulation may include: (1) virtually irradiating the first portion P1 of the model plate 9 with the first laser beam LB1; and (2) virtually irradiating the second portion P2 of the model plate 9 with the first laser beam LB1, and the second portion P2 is different from the first portion P1. In addition, a simulation value of the amount of the deflection of the model plate 9, the deflection occurring due to virtual irradiation of the first laser beam LB1 on a plurality of portions including the first portion P1 and the second portion P2, may be set as the basic deflection amount B.

In a second step ST2, the transportation plate 3 is designed, based on the model plate 9. The second step ST2 is a design process. FIG. 8 illustrates an example of the transportation plate 3, which is designed by performing the design process (in other words, the transportation plate 3, which is designed, based on the model plate 9).

As illustrated in FIG. 9, when the transportation plate 3 is irradiated with the first laser beam LB1, the temperature of the transportation plate 3 is raised and the transportation plate 3 is thermally deformed. Then, when the temperature is lowered to a normal temperature (for example, approximately 20 degrees Celsius), the transportation plate 3 returns to its original shape, or the compressive plastic strain occurs. When the compressive plastic strain occurs, the transportation plate 3 is deflected in the third direction DR3 or the fourth direction DR4 (see FIG. 10).

Herein, a first deflection amount C is defined as an amount of deflection (for example, an amount of deflection at the time of the thermal deformation or an amount of deflection that occurs due to the compressive plastic strain) of the transportation plate 3, the deflection occurring due to the irradiation of the first laser beam LB1 on the transportation plate 3, under substantially the same conditions as those of the irradiation of the first laser beam LB1 on the model plate 9. It is to be noted that substantially the same conditions mean that the output of the first laser beam LB1 irradiated on the transportation plate 3 is substantially the same as the output of the first laser beam LB1 irradiated on the model plate 9, the energy density of the first laser beam LB1 irradiated on the transportation plate 3 is substantially the same as the energy density of the first laser beam LB1 irradiated on the model plate 9, the irradiated position of the transportation plate 3 with the first laser beam LB1 is a position substantially corresponding to the irradiated position of the model plate 9 with the first laser beam LB1, and the irradiated time of the first laser beam LB1 irradiated on the transportation plate 3 is substantially the same as the irradiated time of the first laser beam LB1 irradiated on the model plate 9.

When a plurality of positions of the model plate 9 are irradiated with the first laser beam LB1 (in other words, when a plurality of portions of the model plate 9 are irradiated with the first laser beam LB1), "the irradiated position of the transportation plate 3 with the first laser beam LB1 is a position substantially corresponding to the irradiated position of the model plate 9 with the first laser beam LB1" means that the plurality of irradiated positions of the transportation plate 3 with the first laser beam LB1 are respectively positions substantially corresponding to the plurality of irradiated positions of the model plate 9 with the first laser beam LB1. For example, in an example illustrated in FIG. 11, a first irradiated position of the transportation plate 3 with the first laser beam LB1 (more specifically, a third portion P3 of the transportation plate 3) substantially corresponds to the first irradiated position of the model plate 9 with the first laser beam LB1 (more specifically, the first portion P1 of the model plate 9 in FIG. 7). In addition, in the example illustrated in FIG. 11, a second irradiated position of the transportation plate 3 with the first laser beam LB1 (more specifically, a fourth portion P4 of the transportation plate 3) substantially corresponds to the second irradiated position of the model plate 9 with the first laser beam LB1 (more specifically, the second portion P2 of the model plate 9 in FIG. 7).

In the design process (the second step ST2), the transportation plate 3 is designed, based on the model plate 9 so that the first deflection amount C is smaller than the basic deflection amount B.

In the example illustrated in FIG. 8, the design process (more specifically, a process of designing the transportation plate 3, based on the model plate 9) includes designing the transportation plate 3 by adding, to the model plate 9, a protection component 38, which covers at least a part of the transportation surface 9u of the model plate 9. In the example illustrated in FIG. 8, the transportation plate 3, which has been designed in the design process, includes: a base 30 having a shape corresponding to the shape of the model plate 9; and the protection component 38, which is attached to the base 30.

The transportation plate in the dross transportation conveyor has been conventionally designed in consideration of only the structural strength, and the thermal deformation due to the laser beam irradiation has not been considered in the design. In contrast, according to the first embodiment, the transportation plate 3 for transporting the dross is designed to reduce the thermal deformation amount or the compressive plastic strain amount in the transportation plate 3. More specifically, at least a part of the transportation surface 9u of the model plate 9 is covered with the protection component 38, and thus the first deflection amount C of the transportation plate 3 including the base 30 becomes smaller than the above-described basic deflection amount B. For example, in the example illustrated in FIG. 9, when the transportation plate 3 is irradiated with the first laser beam LB1, the protection component 38 prevents heat input into the base 30 having a shape corresponding to the shape of the model plate 9. In this manner, the first deflection amount C of the transportation plate 3 including the base 30 is smaller than the above-described basic deflection amount B.

### (Optional and Additional Configurations)

Next, optional and additional configurations that are adoptable in the method for designing the transportation plate for transporting the dross according to the first embodiment will be described with reference to FIGs. 1 to 36.

### (Irradiation of First Laser Beam LB1 on First Portion P1 of Model Plate 9)

In an example illustrated in FIG. 4 and FIG. 5, the deflection amount acquisition process (the first step ST1) includes acquiring data DT1 indicating the first deflection A1 of the model plate 9, the first deflection A1 occurring due to irradiation of the first laser beam LB1 on the first portion P1 of the model plate 9 (for example, a flat transportation surface MF1 of the model plate 9).

In this case, the deflection amount acquisition process (the first step ST1) includes determining the basic deflection amount B in which at least the data DT1 indicating the first deflection A1 is reflected. In addition, the above-described first deflection amount C (see FIG. 10) is an amount of deflection in which at least the third deflection E3 (see FIG. 10) of the transportation plate 3 is reflected, the third deflection E3 occurring due to the irradiation of the first laser beam LB1 on the third portion P3 (see FIG. 9) of the transportation plate 3. The third portion P3 of the transportation plate 3 positionally corresponds to the first portion P1 of the model plate 9.

It is to be noted that when the first portion P1 of the model plate 9 is actually irradiated with the first laser beam LB1, the first portion P1 of the model plate 9 may be irradiated with the first laser beam LB1 in a state in which the model plate 9 is attached to the dross transportation conveyor 12. Alternatively, the first portion P1 of the model plate 9 may be irradiated with the first laser beam LB1 in a state in which the model plate 9 is not attached to the dross transportation conveyor 12.

### (Thermal Deformation and Compressive Plastic Strain)

Immediately after the model plate 9 is irradiated with the first laser beam LB1, the deflection due to the thermal deformation (more specifically, thermal expansion) is dominant in the deflection of the model plate 9. On the other hand, when the temperature of the model plate 9, which has been irradiated with the first laser beam LB1, returns to a normal temperature, the deflection due to the compressive plastic strain becomes dominant in the deflection of the model plate 9. The direction of the deflection of the model plate 9 due to the compressive plastic strain is different from the direction of the deflection of the model plate 9 due to the thermal deformation.

According to the first embodiment, in a case where the deflection amount of the model plate 9 due to the thermal deformation (more specifically, the thermal expansion) of the model plate 9 is adopted as the above-described basic deflection amount B, the deflection amount of the transportation plate 3 due to the thermal deformation (more specifically, the thermal expansion) of the transportation plate 3 is adopted as the above-described first deflection amount C. In other words, in a case where the basic deflection amount B is a deflection amount of the model plate 9 due to the thermal deformation (more specifically, the thermal expansion) of the model plate 9, the above-described first deflection amount C is a deflection amount of the transportation plate 3 due to the thermal deformation (more specifically, the thermal expansion) of the transportation plate 3.

In a case where the basic deflection amount B is the deflection amount of the model plate 9 due to the thermal deformation (more specifically, the thermal expansion) of the model plate 9, the deflection amount of the model plate 9 immediately after the model plate 9 is irradiated with the first laser beam LB1 is acquired as the basic deflection amount B through simulation or experiment in the deflection amount acquisition process (the first step ST1).

On the other hand, according to the first embodiment, in a case where the deflection amount of the model plate 9 due to the compressive plastic strain of the model plate 9 is adopted as the above-described basic deflection amount B, the deflection amount of the transportation plate 3 due to the compressive plastic strain of the transportation plate 3 is adopted as the above-described first deflection amount C. In other words, in a case where the basic deflection amount B is the deflection amount of the model plate 9 due to the compressive plastic strain of the model plate 9, the first deflection amount C is the deflection amount of the transportation plate 3 due to the compressive plastic strain of the transportation plate 3.

In a case where the basic deflection amount B is the deflection amount of the model plate 9 due to the compressive plastic strain of the model plate 9, the deflection amount of the model plate 9 after the model plate 9 that has been irradiated with the first laser beam LB1 is cooled (for example, the deflection amount of the model plate 9 after the model plate 9 that has been irradiated with the first laser beam LB1 returns to a normal temperature) is acquired as the basic deflection amount B through simulation or experiment in the deflection amount acquisition process (the first step ST1).

### (Irradiation of First Laser Beam LB1 on Second Portion P2 of Model Plate 9)

In an example illustrated in FIG. 13, the deflection direction of the model plate 9 in the case where the first portion P1 of the model plate 9 is irradiated with the first laser beam LB1 is different from the deflection direction of the model plate 9 in the case where the second portion P2 of the model plate 9 (that is, a portion different from the first portion P1) is irradiated with the first laser beam LB1.

For example, when the first portion P1 of the model plate 9 is irradiated with the first laser beam LB1, the model plate 9 is deflected in the fourth direction DR4 due to the thermal expansion. In addition, when the first portion P1 on the model plate 9 is irradiated with the first laser beam LB1, the model plate 9 is deflected in the third direction DR3 due to the compressive plastic strain (in other words, the model plate 9 after being cooled is deflected in the third direction DR3).

On the other hand, when the second portion P2 of the model plate 9 is irradiated with the first laser beam LB1, the model plate 9 is deflected in the third direction DR3 due to the thermal expansion. In addition, when the second portion P2 on the model plate 9 is irradiated with the first laser beam LB1, the model plate 9 is deflected in the fourth direction DR4 due to the compressive plastic strain (in other words, the model plate 9 after being cooled is deflected in the fourth direction DR4).

Thus, according to the first embodiment, irradiating the model plate 9 with the first laser beam LB1 may include: irradiating the first portion P1 of the model plate 9 with the first laser beam LB1; and irradiating the second portion P2 of the model plate 9 with the first laser beam LB1. In an example illustrated in FIG. 13, the second portion P2 is a portion further in the second direction DR2 than the first portion P1. In addition, in a plan view (in other words, when viewed in a direction along the fourth direction DR4), a straight line that connects the center of the second portion P2 with the center of the first portion P1 is substantially parallel to the second direction DR2. Further, in the example illustrated in FIG. 13, the second portion P2 is a portion spaced apart from the first portion P1.

It is to be noted that in the case where the basic deflection amount B is actually measured, irradiating the model plate 9 with the first laser beam LB1 includes: actually irradiating the first portion P1 of the model plate 9 with the first laser beam LB1; and actually irradiating the second portion P2 of the model plate 9 with the first laser beam LB1. On the other hand, in the case where the basic deflection amount B is derived through simulation, irradiating the model plate 9 with the first laser beam LB1 includes: virtually irradiating the first portion P1 of the model plate 9 with the first laser beam LB1; and virtually irradiating the second portion P2 of the model plate 9 with the first laser beam LB1.

In an example illustrated in FIG. 14, the deflection amount acquisition process (the first step ST1) includes: (1) irradiating one of the first portion P1 of the model plate 9 and the second portion P2 of the model plate 9 with the first laser beam LB1; (2) moving a laser head HD, which irradiates the first laser beam LB1, relative to the model plate 9; and (3) irradiating the other one of the first portion P1 of the model plate 9 and the second portion of the model plate 9 with the first laser beam LB1. Moving the laser head HD relative to the model plate 9 may be performed by actively moving the laser head HD, or may be performed by actively moving the model plate 9. The active movement of the model plate 9 is performed by actuating the dross transportation conveyor 12 to which the model plate 9 is attached.

The deflection amount acquisition process (the first step ST1) may include: sequentially irradiating the first portion P1 of the model plate 9 and the second portion P2 of the model plate 9 with the first laser beam LB1; and acquiring, as the basic deflection amount B, the deflection amount of the model plate 9 due to the compressive plastic strain that occurs in the model plate 9 in accordance with the irradiation of the first laser beam LB1.

In the example illustrated in FIG. 14, one model plate 9 is irradiated with the first laser beam LB1. Alternatively, as illustrated in FIG. 15, the irradiation of the first laser beam LB1 on the model plate 9 may include: irradiating the first portion P1 of a first model plate 9-1 with the first laser beam LB1; and irradiating the second portion P2 of a second model plate 9-2 with the first laser beam LB1. The second model plate 9-2 can be considered to be substantially identical to the first model plate 9-1.

It is to be noted that herein, in a case where a plurality of model plates that can be considered to be substantially identical to each other are used for acquiring the basic deflection amount B, the plurality of model plates (9-1, 9-2) will be collectively referred to as the "model plate". Thus, herein, irradiating the first portion P1 of the first model plate 9-1 with the first laser beam LB1 is regarded as one aspect of irradiating the first portion P1 of the model plate 9 with the first laser beam LB1, and irradiating the second portion P2 of the second model plate 9-2 with the first laser beam LB1 is regarded as one aspect of irradiating the second portion P2 of the "above" model plate 9 with the first laser beam LB1.

The deflection amount acquisition process (the first step ST1) may include: (1) acquiring the data DT1 indicating the first deflection A1 (see FIG. 16) of the model plate 9, the first deflection A1 occurring due to irradiation of the first laser beam LB1 on the first portion P1 of the model plate 9 (for example, the flat transportation surface MF1 of the model plate 9); (2) acquiring data DT2 indicating the second deflection A2 (see FIG. 17) of the model plate 9, the second deflection A2 occurring due to irradiation on the second portion P2 of the model plate 9 (for example, a convex-shaped transportation surface MU1 of the model plate 9); and (3) determining the basic deflection amount B in which at least data D1 indicating the first deflection A1 and data D2 indicating the second deflection (see FIG. 18) are reflected.

In this case, the above-described first deflection amount C to be compared with the basic deflection amount B is a deflection amount in which at least the third deflection E3 (see FIG. 20) of the transportation plate 3 and the fourth deflection E4 (see FIG. 21) of the transportation plate 3 are reflected. The third deflection E3 of the transportation plate 3 occurs due to the irradiation of the first laser beam LB1 on a third portion P3 (see FIG. 19) of the transportation plate 3, the third portion P3 positionally corresponding to the first portion P1 on the model plate 9, and the fourth deflection E4 (see FIG. 21) of the transportation plate 3 occurs due to the irradiation of the first laser beam LB1 on a fourth portion P4 (see FIG. 19) of the transportation plate 3, the fourth portion P4 positionally corresponding to the second portion P2 of the model plate 9. It is to be noted that in an example illustrated in FIG. 19, the fourth portion P4 is a portion further in the second direction DR2 than the third portion P3. In addition, in a plan view (in other words, when viewed in the direction along the fourth direction DR4), a straight line that connects the center of the fourth portion P4 with the center of the third portion P3 is substantially parallel to the second direction DR2. Further, in the example illustrated in FIG. 19, the fourth portion P4 is a portion spaced apart from the third portion P3.

The deflection amount acquisition process (the first step ST1) may include: (1) acquiring, as the first data DT1 (see FIG. 16), data corresponding to the compressive plastic strain of the model plate 9, the compressive plastic strain occurring due to the irradiation of the first laser beam LB1 on the first portion P1 of the model plate 9; (2) acquiring, as the second data DT2 (see FIG. 17), data corresponding to the compressive plastic strain of the model plate 9, the compressive plastic strain occurring due to the irradiation of the first laser beam LB1 on the second portion P2 of the model plate 9; and (3) determining the basic deflection amount B in which at least the first data DT1 and the second data DT2 are reflected (see FIG. 22).

In this case, the above-described first deflection amount C to be compared with the basic deflection amount B is a deflection amount in which at least data corresponding to the compressive plastic strain of the transportation plate 3 is reflected. The data corresponding to the compressive plastic strain of the transportation plate 3 includes data generated by the irradiation of the first laser beam LB1 on the third portion P3 of the transportation plate 3 (see FIG. 19), the third portion P3 positionally corresponding to the first portion P1 of the model plate 9, and data generated by the irradiation of the first laser beam LB1 on the fourth portion P4 of the transportation plate 3 (see FIG. 19), the fourth portion P4 positionally corresponding to the second portion P2 of the model plate 9.

In an example illustrated in FIG. 22, determining the basic deflection amount B in which at least the first data DA1 and the second data DA2 are reflected may include adding the first data DA1 and the second data DA2. Determining the basic deflection amount B in which at least the first data DA1 and the second data DA2 are reflected may be performed by using a computer 81, or may be performed manually.

It is to be noted that herein, the deflection amount in the third direction DR3 is defined as a "positive deflection amount", and the deflection amount in the fourth direction DR4 is defined as a "negative deflection amount". In other words, the deflection amount in the third direction DR3 is represented by a positive value, and the deflection amount in the fourth direction DR4 is represented by a negative value. Thus, a value obtained by adding the first data DA1 and the second data DA2 can be smaller than a value indicated by the first data DA1 (or a value indicated by the second data DA2). As an example, in FIG. 16, the first data DA1 indicates plus 0. 49 millimeters. As an example, in FIG. 17, the second data DA2 indicates minus 0. 33 millimeters. In addition, the basic deflection amount B is a value obtained by adding plus 0. 49 millimeters and minus 0. 33 millimeters, that is, 0. 16 millimeters.

In an example illustrated in FIG. 16, the first data DA1 is deflection data (more specifically, deflection data corresponding to the compressive plastic strain of the model plate 9, the compressive plastic strain occurring due to the irradiation of the first laser beam LB1 on the first portion P1 of the model plate 9). Alternatively, the first data DA1 may be distribution data of the compressive plastic strain (more specifically, distribution data of the compressive plastic strain of the model plate 9, the compressive plastic strain occurring due to the irradiation of the first laser beam LB1 on the first portion P1 of the model plate 9). It is possible to derive the distribution data of the compressive plastic strain as the first data DA1 through simulation using a computer.

In the example illustrated in FIG. 17, the second data DA2 is deflection data (more specifically, deflection data corresponding to the compressive plastic strain of the model plate 9, the compressive plastic strain occurring due to the irradiation of the first laser beam LB1 on the second portion P2 of the model plate 9). Alternatively, the second data DA2 may be distribution data of the compressive plastic strain (more specifically, distribution data of the compressive plastic strain of the model plate 9, the compressive plastic strain occurring due to the irradiation of the first laser beam LB1 on the second portion P2 of the model plate 9). It is possible to derive the distribution data of the compressive plastic strain as the second data DA2 through simulation using a computer.

Additionally, the deflection amount acquisition process (the first step ST1) may include acquiring, as the third data, data corresponding to the compressive plastic strain of the model plate 9, the compressive plastic strain occurring due to the irradiation of the first laser beam LB1 on further another portion of the model plate 9 (in other words, a portion different from the first portion P1 and the second portion P2). In this case, at least the first data DA1, the second data DA2, and the third data are reflected in the basic deflection amount B.

In the example illustrated in FIG. 13, the first portion P1 of the model plate 9 is a portion that is more easily deflected than any other portion of the model plate 9. For this reason, in the deflection amount acquisition process (the first step ST1), the basic deflection amount B may be determined, based on only the data corresponding to the compressive plastic strain of the model plate 9, the compressive plastic strain occurring due to the irradiation of the first laser beam LB1 on the first portion P1 of the model plate 9 (for example, a middle portion 9m of the model plate 9).

In the example illustrated in FIG. 22, the first data DA1 is data corresponding to the compressive plastic strain of the model plate 9, the compressive plastic strain occurring due to the irradiation of the first laser beam LB1 on the first portion P1 of the model plate 9, and the second data DA2 is data corresponding to the compressive plastic strain of the model plate 9, the compressive plastic strain occurring due to the irradiation of the first laser beam LB1 on the second portion P2 on the model plate 9. Alternatively, the first data DA1 may be data corresponding to the thermal expansion of the model plate 9, the thermal expansion occurring due to the irradiation of the first laser beam LB1 on the first portion P1 of the model plate 9 (for example, deflection data due to the thermal expansion). In addition, the second data DA2 may be data corresponding to the thermal expansion of the model plate 9, the thermal expansion occurring due to the irradiation of the first laser beam LB1 on the second portion P2 of the model plate 9 (for example, deflection data due to the thermal expansion).

### (Model Plate 9)

In the example illustrated in FIG. 13, the second portion P2 is a front end portion 9f of the model plate 9 (more specifically, a central portion in the longitudinal direction of the front end portion 9f). The second portion P2 may be the convex-shaped transportation surface MU1 of the model plate 9. In the example illustrated in FIG. 13, the first portion P1 is a middle portion 9m of the model plate 9 (more specifically, a central portion in the longitudinal direction of the middle portion 9m). The first portion P1 may be a flat transportation surface MF1 of the model plate 9.

A first example of the shape of the model plate 9 (see FIG. 23) and a second example of the shape of the model plate 9 (see FIG. 24) will be described.

In an example illustrated in FIG. 23 or FIG. 24, the model plate 9 includes: the front end portion 9f; a rear end portion 9e; and the middle portion 9m, which connects the front end portion 9f with the rear end portion 9e. It is to be noted that the front end portion 9f of the model plate 9 is an end portion on the front in the moving direction (in other words, an end portion in the second direction DR2), and the rear end portion 9e of the model plate 9 is an end portion on the rear in the moving direction (in other words, an end portion opposite to the second direction DR2).

As illustrated in FIG. 23 or FIG. 24, the model plate 9 includes: the transportation surface 9u; and the back surface 9n. The transportation surface 9u is a surface assumed to support the dross when it is assumed that the dross is transported by the model plate 9. The back surface 9n is a surface at an opposite end of the transportation surface 9u, in the model plate 9.

As illustrated in FIG. 23 or FIG. 24, the model plate 9 includes: a left end portion 9a; and a right end portion 9b. In the example illustrated in FIG. 23 or FIG. 24, the left end portion 9a of the model plate 9 is an end portion on the left when the transportation surface 9u of the model plate 9 is viewed in a direction from the rear end portion 9e toward the front end portion 9f, and the right end portion 9b of the model plate 9 is an end portion on the right when the transportation surface 9u of the model plate 9 is viewed in the direction from the rear end portion 9e toward the front end portion 9f.

In the example illustrated in FIG. 23, the front end portion 9f of the model plate 9 includes a convex-shaped curved portion 91f, which extends in the first direction DR1, and which is convex in the third direction DR3. The front end portion 9f of the model plate 9 also includes the convex-shaped transportation surface MU1, which extends in the first direction DR1. The convex-shaped transportation surface MU1 is a surface at an end of the convex-shaped curved portion 91f in the third direction DR3. In the example illustrated in FIG. 23, the convex-shaped transportation surface MU1 is a surface that is convex in the third direction DR3 (more specifically, a curved surface that is convex in the third direction DR3), and constitutes a part of the transportation surface 9u of the model plate 9.

In the example illustrated in FIG. 23, the rear end portion 9e of the model plate 9 extends in the first direction DR1, and includes an upright portion 93e, which extends in the first direction DR1, and which protrudes in the third direction DR3.

In the example illustrated in FIG. 23, the middle portion 9m of the model plate 9 connects the front end portion 9f with the rear end portion 9e. In the example illustrated in FIG. 23, a front end of the middle portion 9m is connected with the front end portion 9f (more specifically, the convex-shaped curved portion 91f) through a first bent portion 94, which extends in the first direction DR1. In addition, a rear end of the middle portion 9m is connected with the rear end portion 9e (more specifically, the upright portion 93e) through a second bent portion 95, which extends in the first direction DR1.

In the example illustrated in FIG. 23, the middle portion 9m includes a flat portion 96m. The middle portion 9m also includes the flat transportation surface MF1, which extends in the first direction DR1. The flat transportation surface MF1 is a surface at an end of the flat portion 96m in the third direction DR3. The flat transportation surface MF1 constitutes a part of the transportation surface 9u of the model plate 9.

It is to be noted that the shape of the front end portion 9f of the model plate 9, the shape of the rear end portion 9e of the model plate 9, and the shape of the middle portion 9m of the model plate 9 are not limited to the examples illustrated in FIG. 23. For example, the shape of the rear end portion 9e of the model plate 9 may be a substantially arc shape or a substantially circular shape when viewed in the direction along the first direction DR1. In addition, at least a part of the middle portion 9m of the model plate 9 may have a substantially arc shape, a substantially letter V shape, or a substantially letter U shape when viewed in the direction along the first direction DR1.

In the example illustrated in FIG. 24, the front end portion 9f of the model plate 9 includes a plurality of front reception portions 92f, which receive a rod (more specifically, a plurality of through hole portions into which a rod is inserted). The front end portion 9f of the model plate 9 also includes the convex-shaped transportation surface MU1, which extends in the first direction DR1. The convex-shaped transportation surface MU1 is a surface at an end of the front end portion 9f of the model plate 9 in the third direction DR3. In the example illustrated in FIG. 24, the convex-shaped transportation surface MU1 is a surface that is convex in the third direction DR3 (more specifically, a curved surface that is convex in the third direction DR3), and constitutes a part of the transportation surface 9u of the model plate 9.

In the example illustrated in FIG. 24, the rear end portion 9e of the model plate 9 includes a plurality of rear reception portions 94e, which receive another rod (more specifically, a plurality of through hole portions into which another rod is inserted). The rear end portion 9e of the model plate 9 also includes a second convex-shaped transportation surface MU2, which extends in the first direction DR1. The second convex-shaped transportation surface MU2 is a surface at an end of the rear end portion 9e of the model plate 9 in the third direction DR3. In the example illustrated in FIG. 24, the second convex-shaped transportation surface MU2 is a curved surface that is convex in the third direction DR3, and constitutes a part of the transportation surface 9u of the model plate 9.

In the example illustrated in FIG. 24, the middle portion 9m of the model plate 9 connects the front end portion 9f with the rear end portion 9e. In the example illustrated in FIG. 24, the middle portion 9m includes a flat portion 96m. The middle portion 9m also includes a flat transportation surface MF1, which extends in the first direction DR1. The flat transportation surface MF1 is a surface at an end of the flat portion 96m in the third direction DR3. The flat transportation surface MF1 constitutes a part of the transportation surface 9u of the model plate 9.

It is to be noted that the shape of the model plate 9 is not limited to the examples illustrated in FIG. 23 and FIG. 24.

The length of the model plate 9 (more specifically, the length in the direction along the first direction DR1 of the model plate 9) is, for example, equal to or longer than one meter and equal to or shorter than three meters.

The width of the model plate 9 (more specifically, the width of the model plate 9 in the direction along the second direction DR2) is, for example, equal to or longer than 40 millimeters and equal to or shorter than 200 millimeters.

The plate thickness of the model plate 9 (for example, the plate thickness of the middle portion 9m of the model plate 9) is, for example, equal to or shorter than 10 millimeters, equal to or shorter than five millimeters, or equal to or shorter than three millimeters.

In the example illustrated in FIG. 23, the plate thickness of the front end portion 9f of the model plate 9 is substantially constant, and the plate thickness of the rear end portion 9e of the model plate 9 is substantially constant. The plate thickness of the middle portion 9m of the model plate 9 is also substantially constant. In the example illustrated in FIG. 23, the plate thickness of the model plate 9 is substantially constant as a whole.

The model plate 9 is made of metal. The model plate 9 is made of, for example, steel, more specifically, a hot-rolled soft steel plate, a cold-rolled steel plate, or a cold-rolled stainless steel plate.

### (Design Process)

The design process (the second step ST2) may include confirming a deflection characteristic of the transportation plate 3.

In the examples illustrated in FIG. 16 and FIG. 18, the above-described deflection amount acquisition process (the first step ST1) includes: (1) acquiring the data DT1 indicating the first deflection A1 of the model plate 9 (for example, the deflection data corresponding to the compressive plastic strain of the model plate 9), the first deflection A1 occurring due to the irradiation of the first laser beam LB1 on the first portion P1 of the model plate 9 (more specifically, the middle portion 9m of the model plate 9 or the flat transportation surface MF1 of the model plate 9); and (2) determining the basic deflection amount B in which at least the data indicating the first deflection A1 is reflected.

As illustrated in FIG. 19, FIG. 20, and FIG. 25, the design process (the second step ST2) may include: (1) acquiring data DT3 (for example, the deflection data corresponding to the compressive plastic strain of the transportation plate 3) indicating the third deflection E3 of the transportation plate 3, the third deflection E3 occurring due to the irradiation of the first laser beam LB1 on the third portion P3 of the transportation plate 3 (see FIG. 19), the third portion P3 positionally corresponding to the first portion P1 of the model plate 9 (see FIG. 20), (2) determining the first deflection amount C in which at least the data DT3 indicating the third deflection E3 is reflected (see FIG. 25); and (3) confirming that a condition that the first deflection amount C is smaller than the basic deflection amount B is satisfied.

It is to be noted that acquiring the data DT3 indicating the third deflection E3 may be performed by actually measuring the third deflection E3 of the transportation plate 3, the third deflection E3 occurring due to actual irradiation of the first laser beam LB1 on the transportation plate 3. Alternatively, acquiring the data DT3 indicating the third deflection E3 may be performed through simulation using a computer. Determining the first deflection amount C, in which at least the data DT3 indicating the third deflection E3 (for example, the deflection data corresponding to the compressive plastic strain of the transportation plate 3) is reflected, may be performed by using the computer 81, or may be performed manually. In addition, confirming that the condition that the first deflection amount C is smaller than the basic deflection amount B is satisfied may be performed by using the computer 81, or may be performed manually.

In the examples illustrated in FIG. 16, FIG. 17, and FIG. 22, the above-described deflection amount acquisition process (the first step ST1) includes: (1) acquiring, as the first data DA1, the data DT1 indicating the first deflection A1 of the model plate 9, the first deflection A1 occurring due to the irradiation of the first laser beam LB1 on the first portion P1 of the model plate 9 (more specifically, the middle portion 9m of the model plate 9 or the flat transportation surface MF1 of the model plate 9) (more specifically, the data corresponding to the compressive plastic strain of the model plate 9, the compressive plastic strain occurring due to the irradiation of the first laser beam LB1 on the first portion P1 of the model plate 9) (see FIG. 16); (2) acquiring, as the second data DA2, the data DT2 indicating the second deflection A2 of the model plate 9, the second deflection A2 occurring due to the irradiation of the first laser beam LB1 on the second portion P2 of the model plate 9 (more specifically, the front end portion 9f of the model plate 9 or the convex-shaped transportation surface MU1 of the model plate 9) (more specifically, the data corresponding to the compressive plastic strain of the model plate 9, the compressive plastic strain occurring due to the irradiation of the first laser beam LB1 on the second portion P2 of the model plate 9) (see FIG. 17); and (3) determining the basic deflection amount B in which at least the first data DA1 and the second data DA2 are reflected (see FIG. 22).

As illustrated in FIG. 19, FIG. 20, FIG. 21, and FIG. 26, the design process (the second step ST2) may include: (1) acquiring, as the third data DA3, the data DT3 indicating the third deflection E3 of the transportation plate 3, the third deflection E3 occurring due to the irradiation of the first laser beam LB1 on the third portion P3 of the transportation plate 3, the third portion P3 positionally corresponding to the first portion P1 of the model plate 9 (see FIG. 19) (more specifically, the data corresponding to the compressive plastic strain of the transportation plate 3, the compressive plastic strain occurring due to the irradiation of the first laser beam LB1 on the third portion P3 of the transportation plate 3, the third portion P3 positionally corresponding to the first portion P1 of the model plate 9) (see FIG. 16); (2) acquiring, as the fourth data DA4, the data DT4 indicating the fourth deflection E4 of the transportation plate 3, the fourth deflection E4 occurring due to the irradiation of the first laser beam LB1 on the fourth portion P4 of the transportation plate 3, the fourth portion P4 positionally corresponding to the second portion P2 of the model plate 9 (see FIG. 19) (more specifically, the data corresponding to the compressive plastic strain of the transportation plate 3, the compressive plastic strain occurring due to the irradiation of the first laser beam LB1 on the fourth portion P4 of the transportation plate 3, the fourth portion P4 positionally corresponding to the second portion P2 of the model plate 9) (see FIG. 21); (3) determining the first deflection amount C, in which at least the third data DA3 and the fourth data DA4 are reflected (see FIG. 26); and (4) confirming that the condition that the first deflection amount C is smaller than the basic deflection amount B is satisfied.

It is to be noted that acquiring the third data DA3 and the fourth data DA4 may be performed, based on an experiment including actually irradiating the first laser beam LB1 on the transportation plate 3, or may be performed through simulation using a computer. Determining the first deflection amount C, in which at least the third data DA3 and the fourth data DA4 are reflected, may be performed by using the computer 81, or may be performed manually. In addition, confirming that the condition that the first deflection amount C is smaller than the basic deflection amount B is satisfied may be performed by using the computer 81, or may be performed manually.

It is to be noted that in the design process (the second step ST2), in a case where the transportation plate 3 is designed so that the condition that the first deflection amount C is smaller than the basic deflection amount B is apparently satisfied, confirming the deflection characteristic of the transportation plate 3 may be omitted.

In the example illustrated in FIG. 13, FIG. 16, and FIG. 17, the direction of the deflection of the model plate 9, the deflection occurring due to the irradiation of the first laser beam LB1 on the middle portion 9m of the model plate 9 (FIG. 16: the third direction DR3), is opposite to the direction of the deflection of the model plate 9, the deflection occurring due to the irradiation of the first laser beam LB1 on the front end portion 9f of the model plate 9 (FIG. 17: the fourth direction DR4). In this case, the design process (the second step ST2) may include designing the transportation plate 3, based on the model plate 9, so that the difference between the absolute value of magnitude of the deflection of the transportation plate 3, the deflection occurring due to the irradiation of the first laser beam LB1 on the first front end portion 3f of the transportation plate 3, and the absolute value of magnitude of the deflection of the transportation plate 3, the deflection occurring due to the irradiation of the first laser beam LB1 on a first middle portion 3m of the transportation plate 3, is smaller than the difference between the absolute value of magnitude of the deflection of the model plate 9, the deflection occurring due to the irradiation of the first laser beam LB1 on the front end portion 9f of the model plate 9, and the absolute value of magnitude of the deflection of the model plate 9, the deflection occurring due to the irradiation of the first laser beam LB1 on the middle portion 9m f the model plate 9.

### (First Example of Design)

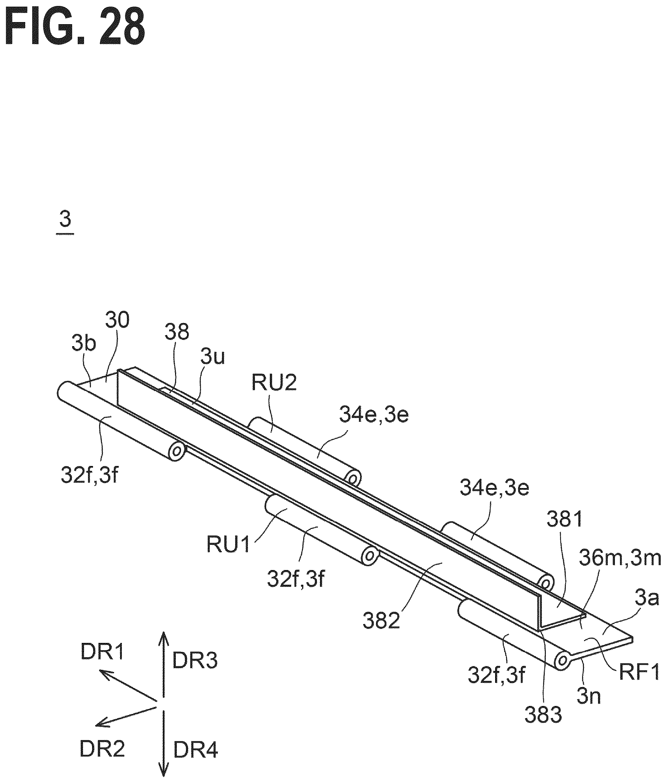

In an example illustrated in FIG. 27 or FIG. 28, the design process (the second step ST2) includes designing the transportation plate 3, by adding, to the model plate 9, the protection component 38, which covers at least a part of the transportation surface 9u of the model plate 9 (see FIG. 23 or FIG. 24). In the example illustrated in FIG. 27 or FIG. 28, the transportation plate 3 that has been designed in the design process includes: the base 30 having a shape corresponding to the shape of the model plate 9; and the protection component 38. The protection component 38 is disposed in contact with the base 30. More specifically, the protection component 38 is attached to the base 30.

At least a part of the surface at an end in the third direction DR3 of the base 30, which has a shape corresponding to the shape of the model plate 9, is covered with the protection component 38, and thus heat input into the base 30 (that is, heat input due to the laser beam irradiation) is prevented. In this manner, thermal deformation of the base 30 due to the irradiation of the first laser beam LB1 (or the laser beam LB) is prevented. An occurrence of the compressive plastic strain in the base 30 is also prevented.

In the example illustrated in FIG. 27 or FIG. 28, the protection component 38 includes: a first plate portion 381; a second plate portion 382; and a bent portion 383. The bent portion 383 is disposed between the first plate portion 381 and the second plate portion 382, and extends in the first direction DR1.

In a case where the protection component 38 includes two plate portions and the bent portion 383, which is disposed between the two plate portions, the geometrical moment of inertia of the protection component 38 increases. Therefore, the protection component 38 is less likely to be bent. The plate thickness of the protection component 38 can also be made relatively thin.

As illustrated in FIG. 27 or FIG. 28, the first plate portion 381 may be disposed in contact with the base 30. In addition, the second plate portion 382 may be disposed to be upright in a direction away from the base 30. In the example illustrated in FIG. 27 or FIG. 28, the protection component 38 has a substantially letter L shape in a cross-section perpendicular to the first direction DR1.

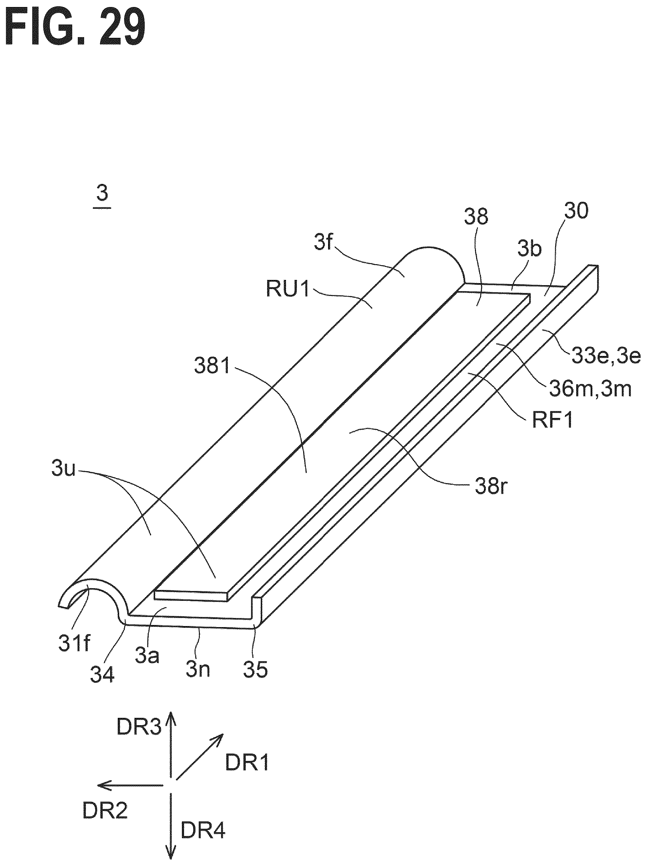

As illustrated in FIG. 29, the bent portion may be omitted from the protection component 38. More specifically, the protection component 38 may have a flat plate shape.

The surface at an end of the protection component 38 in the third direction DR3 may be made up of a surface 38r of a laser beam reflection layer (for example, a copper layer, a silver layer, or an aluminum layer). The laser reflectivity on the surface 38r of the laser beam reflection layer with respect to a laser beam having a wavelength equal to or longer than 1060 nanometers and equal to or shorter than 1080 nanometers is, for example, equal to or larger than 70%, equal to or larger than 80%, or equal to or larger than 90%.

The protection component 38 (for example, the first plate portion 381) may be configured to be deflected in a direction away from the base 30 in response to the protection component 38 being irradiated with the laser beam LB. In addition, an air layer may be formed between the base 30 and the protection component 38 by the protection component 38 being deflected in the direction away from the base 30.

It is to be noted that the shape of the protection component 38 is not limited to the substantially letter L shape or the flat plate shape. For example, the protection component 38 may have a substantially letter C shape, a substantially letter U shape, and a substantially letter V shape in the cross-section perpendicular to the first direction DR1.

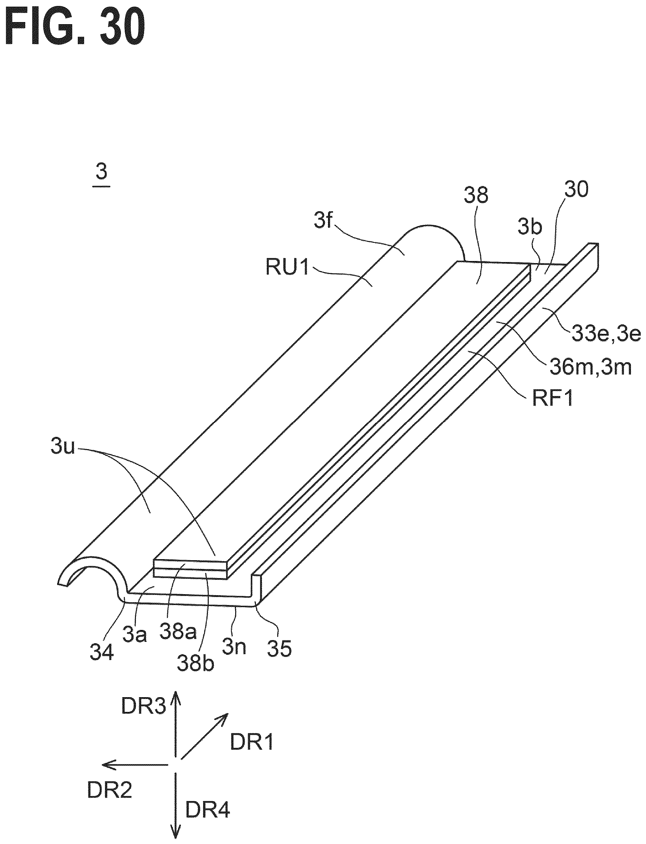

As illustrated in FIG. 30, the protection component 38 may include a first protection component 38a and a heat insulation material 38b. In an example illustrated in FIG. 30, a heat insulation material 38b is disposed between the first protection component 38a and the base 30. Alternatively, an air layer may be present between the first protection component 38a and the base 30.

In the examples illustrated in FIG. 27 to FIG. 30, the protection component 38 extends in the first direction DR1. The length of the protection component 38 in the direction along the first direction DR1 may be equal to or longer than 0. 5 meters, may be equal to or longer than 0. 8 meters, or may be equal to or longer than one meter. In addition, the length of the protection component 38 in the direction along the first direction DR1 may be equal to or shorter than two meters.

In the example illustrated in FIG. 27 to FIG. 30, the base 30 includes: the first front end portion 3f having a shape corresponding to the shape of the front end portion 9f of the model plate 9; the first middle portion 3m having a shape corresponding to the shape of the middle portion 9m of the model plate 9; and a first rear end portion 3e having a shape corresponding to the shape of the rear end portion 9e of the model plate 9. In addition, the first front end portion 3f includes a convex-shaped transportation surface RU1 having a shape corresponding to the shape of the convex-shaped transportation surface MU1 of the model plate 9. Furthermore, the first middle portion 3m has a flat transportation surface RF1 having a shape corresponding to the shape of the flat transportation surface MF1 of the model plate 9.

In the example illustrated in FIG. 13, FIG. 16, and FIG. 17, magnitude AM1 (see FIG. 16) of the deflection of the model plate 9, the deflection occurring due to the irradiation of the first laser beam LB1 on the middle portion 9m of the model plate 9 is larger than magnitude AM2 (see FIG. 17) of the deflection of the model plate 9, the deflection occurring due to the irradiation of the first laser beam LB1 on the front end portion 9f of the model plate 9.

In this case, the design process (in other words, the process of designing the transportation plate 3, based on the model plate 9) preferably includes designing the transportation plate 3, by adding, to the model plate 9, the protection component 38, which mainly covers the middle portion 9m of the model plate 9 (more specifically, the protection component 38, which mainly covers the flat transportation surface MF1 of the model plate).

In other words, as illustrated in FIG. 27 to FIG. 30, the design process (in other words, the process of designing the transportation plate 3, based on the model plate 9) preferably includes disposing, on the base 30, the protection component 38, which mainly covers the first middle portion 3m (more specifically, the protection component 38, which mainly covers the flat transportation surface RF1 of the base 30) so as to reduce the deflection of the first middle portion 3m of the base 30.

### (Second Example of Design)

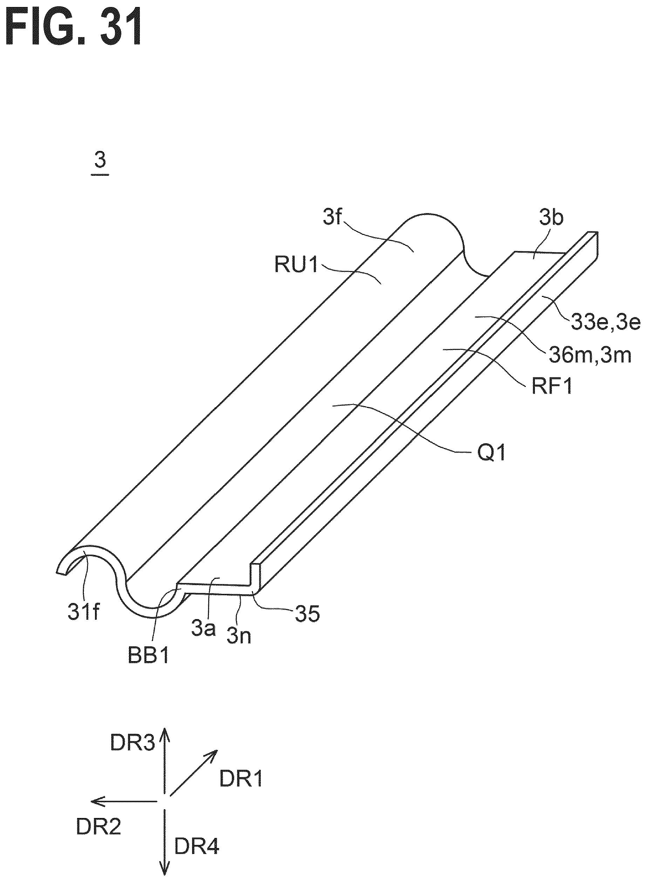

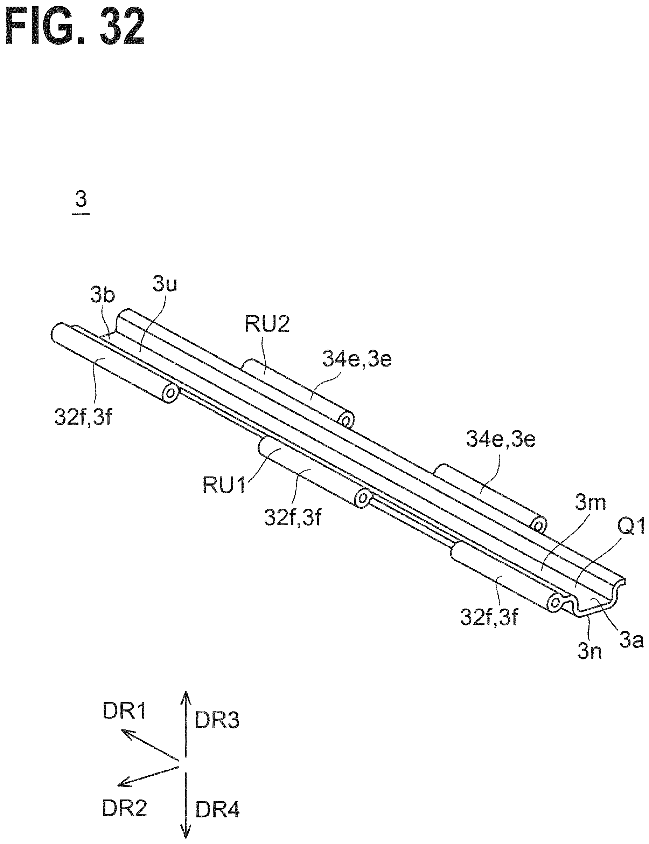

In an example illustrated in FIG. 31 or FIG. 32, the design process (the second step ST2) includes designing the transportation plate 3, by changing the shape of the model plate 9 itself. In the example illustrated in FIG. 31 or FIG. 32, the transportation plate 3 that has been designed in the design process includes: the first front end portion 3f having a shape corresponding to the shape of the front end portion 9f of the model plate 9; the first rear end portion 3e having a shape corresponding to the shape of the rear end portion 9e of the model plate 9; and the first middle portion 3m, which connects the first front end portion 3f with the first rear end portion 3e.

In the example illustrated in FIG. 13, FIG. 16, and FIG. 17, the magnitude AM1 (see FIG. 16) of the deflection of the model plate 9, the deflection occurring due to the irradiation of the first laser beam LB1 on the middle portion 9m of the model plate 9 is larger than the magnitude AM2 (see FIG. 17) of the deflection of the model plate 9, the deflection occurring due to the irradiation of the first laser beam LB1 on the front end portion 9f of the model plate 9.

In this case, the design process (in other words, the process of designing the transportation plate 3, based on the model plate 9) preferably includes designing the transportation plate 3 by changing mainly the shape of the middle portion 9m of the model plate 9. For example, the design process may include designing the transportation plate 3 by changing the shape of the middle portion 9m of the model plate 9 from a flat plate shape to a convex plate shape that protrudes in the third direction DR3 or the fourth direction DR4.

The design process may also include designing the transportation plate 3 by forming a first concave portion Q1, which is recessed in the fourth direction DR4, and which extends in the first direction DR1, in the middle portion 9m of the model plate 9. In the example illustrated in FIG. 31, the first concave portion Q1 has a substantially arc shape in a cross-section perpendicular to the first direction DR1. In the example illustrated in FIG. 32, the first concave portion Q1 has a substantially letter U shape in the cross-section perpendicular to the first direction DR1. Alternatively, the first concave portion Q1 may have a substantially letter V shape in the cross-section perpendicular to the first direction DR1.

In other words, the design process (in other words, the process of designing the transportation plate 3, based on the model plate 9) may include forming the first concave portion Q1, which is recessed in the fourth direction DR4, and which extends in the first direction DR1, in the first middle portion 3m of the transportation plate 3, so as to reduce the deflection of the first middle portion 3m of the transportation plate 3. The first concave portion Q1 has, for example, a substantially arc shape, a substantially letter V shape, or a substantially letter U shape in the cross-section perpendicular to the first direction DR1.

As illustrated in FIG. 31, the design process (in other words, the process of designing the transportation plate 3, based on the model plate 9) may include providing, in the first middle portion 3m of the transportation plate 3, the first concave portion Q1, which extends in the first direction DR1, a first flat portion 36m, which extends in the first direction DR1, and a bent portion BB1, which connects the first concave portion Q1 with the first flat portion 36m.

### (Third Example of Design)

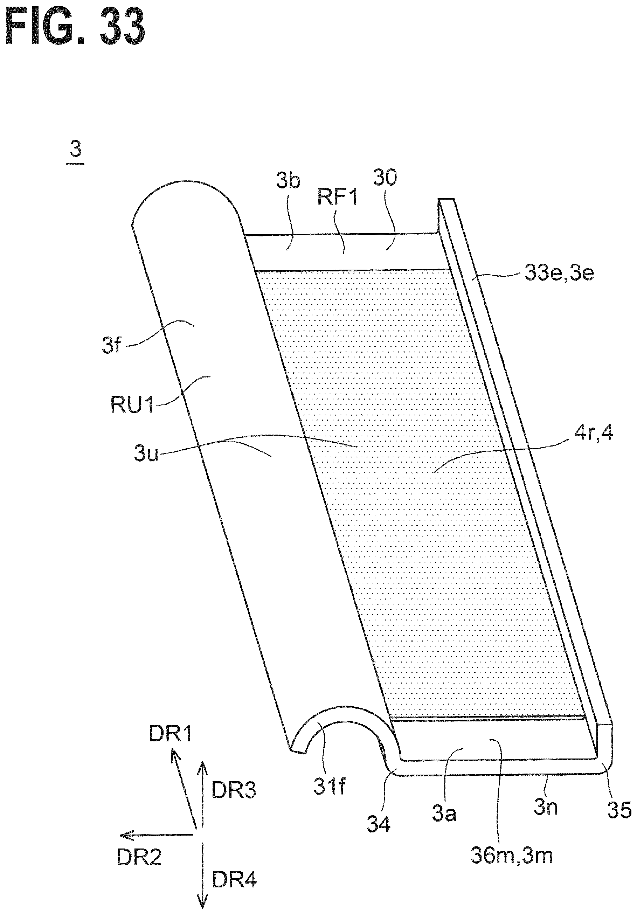

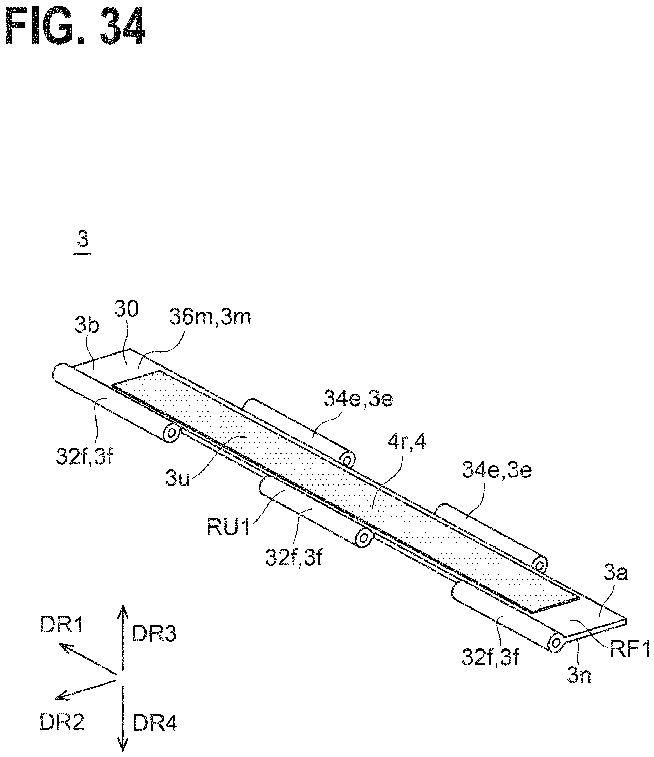

In an example illustrated in FIG. 33 or FIG. 34, the design process (the second step ST2) includes designing the transportation plate 3 by covering at least a part of the surface of the model plate 9 with a temperature rise prevention surface 4. In the example illustrated in FIG. 33 or FIG. 34, the transportation plate 3 that has been designed in the design process includes the base 30 having a shape corresponding to the shape of the model plate 9, and the temperature rise prevention surface 4. The temperature rise prevention surface 4 covers at least a part of the base 30, and prevents a temperature rise of the base 30 due to laser energy.

In the example illustrated in FIG. 33 or FIG. 34, the temperature rise prevention surface 4 includes the surface of the laser beam reflection layer 4r. More specifically, at least a part of the surface at an end of the base 30 in the third direction DR3 is covered with the laser beam reflection layer 4r.

At least a part of the surface at an end in the third direction DR3 of the base 30, which has a shape corresponding to the shape of the model plate 9, is covered with the laser beam reflection layer 4r, and thus heat input into the base 30 (that is, heat input due to the laser beam irradiation) is prevented. In this manner, the thermal deformation of the base 30 due to the laser beam irradiation is prevented. An occurrence of the compressive plastic strain in the base 30 is also prevented.

The laser reflectivity of the laser beam reflection layer 4r with respect to a laser beam having a wavelength equal to or longer than 1060 nanometers and equal to or shorter than 1080 nanometers is, for example, equal to or larger than 70%, equal to or larger than 80%, or equal to or larger than 90%. The laser beam reflection layer 4r is, for example, a copper layer, a silver layer, or an aluminum layer.

The laser beam reflection layer 4r includes, for example, a plating layer such as a copper plating layer, a silver plating layer, or an aluminum plating layer. Alternatively, the laser beam reflection layer 4r may include a laser reflection plate (for example, a copper or copper alloy plate, or an aluminum or aluminum alloy plate) that is attached to the base 30.

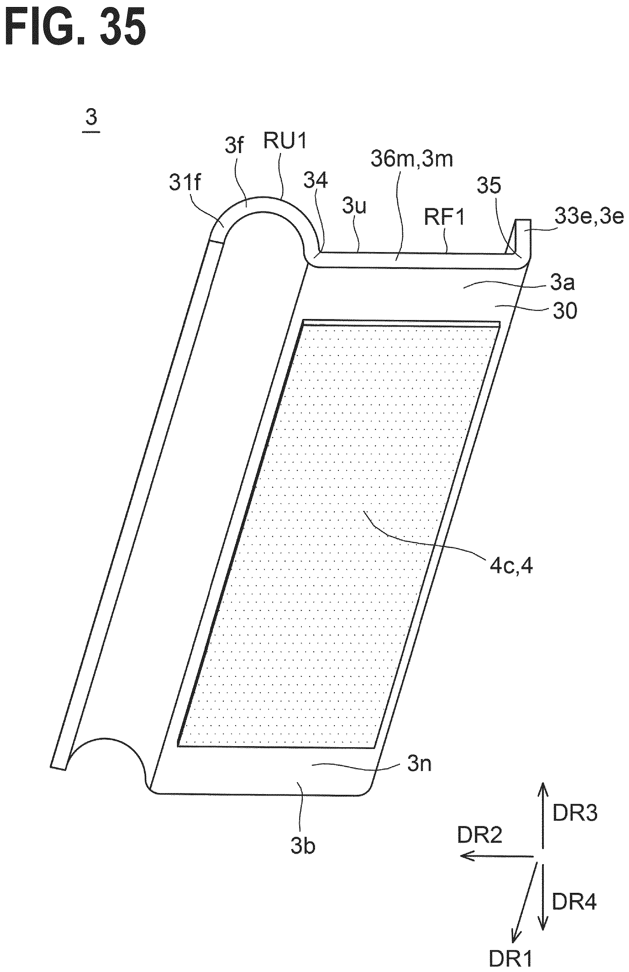

In an example illustrated in FIG. 35, the temperature rise prevention surface 4 includes the surface of a heat conduction layer 4c, which covers at least a part of the surface at an end of the bases 30 in the fourth direction DR4. The heat conductivity of the heat conduction layer 4c is higher than the conductivity of the base 30.

The heat conduction layer 4c promptly dissipates the heat from a region, which has been irradiated with the laser beam, in the transportation plate 3 to another region of the transportation plate 3. In addition, the surface of the heat conduction layer 4c promptly dissipates the heat of the transportation plate 3 into the air around the transportation plate 3. In this manner, the thermal deformation of the base 30 due to the laser beam irradiation is prevented. An occurrence of the compressive plastic strain in the base 30 is also prevented.

The heat conductivity of the first heat conduction layer 4c is, for example, equal to or higher than 150 W/m•K, equal to or higher than 200 W/m•K, or equal to or higher than 300 W/m•K. The heat conduction layer 4c is, for example, a copper layer, a silver layer, or an aluminum layer.

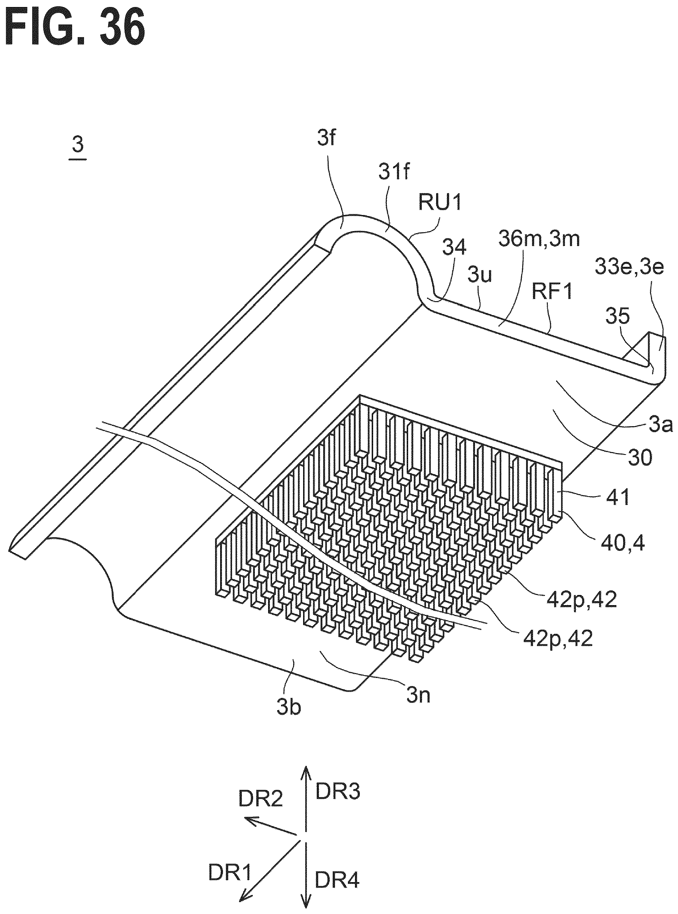

In an example illustrated in FIG. 36, the temperature rise prevention surface 4 includes a surface of the heat dissipation members 40, which is disposed in contact with at least a part of the surface at an end of the bases 30 in the fourth direction DR4. In the example illustrated in FIG. 36, the heat dissipation member 40 is attached to the base 30.

In the example illustrated in FIG. 36, the heat dissipation member 40 includes a heat sink 41. The heat sink 41 may include a plurality of heat dissipation pieces 42 (for example, a plurality of heat dissipation pins 42p or a plurality of heat dissipation fins). The heat sink 41 is made of, for example, aluminum, copper, or ceramics.

The heat dissipation member 40 receives the heat from a region, which has been irradiated with the laser beam, of the transportation plate 3, and dissipates the received heat to the air around the heat dissipation member 40. In this manner, the thermal deformation of the base 30 due to the laser beam irradiation is prevented. An occurrence of the compressive plastic strain in the base 30 is also prevented.

In the example illustrated in FIG. 33 to FIG. 36, the base 30 includes: the first front end portion 3f having a shape corresponding to the shape of the front end portion 9f of the model plate 9; the first middle portion 3m having a shape corresponding to the shape of the middle portion 9m of the model plate 9; and the first rear end portion 3e having a shape corresponding to the shape of the rear end portion 9e of the model plate 9. In addition, the first front end portion 3f has the convex-shaped transportation surface RU1 having a shape corresponding to the shape of the convex-shaped transportation surface MU1 of the model plate 9. Furthermore, the first middle portion 3m has the flat transportation surface RF1 having a shape corresponding to the shape of the flat transportation surface MF1 of the model plate 9.

In the example illustrated in FIG. 13, FIG. 16, and FIG. 17, the magnitude AM1 (see FIG. 16) of the deflection of the model plate 9, the deflection occurring due to the irradiation of the first laser beam LB1 on the middle portion 9m of the model plate 9, is larger than the magnitude AM2 (see FIG. 17) of the deflection of the model plate 9, the deflection occurring due to the irradiation of the first laser beam LB1 on the front end portion 9f of the model plate 9.

In this case, the design process (in other words, the process of designing the transportation plate 3, based on the model plate 9) preferably includes designing the transportation plate 3 by adding, to the model plate 9, the temperature rise prevention surface 4, which covers mainly the middle portion 9m of the model plate 9 (more specifically, the temperature rise prevention surface 4, which covers mainly the flat portion 96m of the model plate 9).

In other words, as illustrated in FIG. 33 to FIG. 36, the design process (in other words, the process of designing the transportation plate 3, based on the model plate 9) preferably includes disposing the temperature rise prevention surface 4, which covers mainly the first middle portion 3m, in the base 30 so as to reduce the deflection of the first middle portion 3m of the base 30.

At least two of the above-described first example of the design, the above-described second example of the design, and the above-described third example of the design may be combined together.

For example, in the example illustrated in FIG. 27, the laser beam reflection layer 4r may be disposed on at least a part of the surface at an end of the protection component 38 in the third direction DR3. For example, in the example illustrated in FIG. 31, at least a part of the surface at an end of the transportation plate 3 in the fourth direction DR4 may be made up of the heat conduction layer 4c (for example, a copper layer, a silver layer, or an aluminum layer).

### (Designed Transportation Plate 3)

In the examples illustrated in FIG. 27 to FIG. 36, the designed transportation plate 3 includes: the first front end portion 3f; the first rear end portion 3e; and the first middle portion 3m, which connects the first front end portion 3f with the first rear end portion 3e. It is to be noted that the first front end portion 3f of the transportation plate 3 is an end portion on the front in the moving direction (in other words, an end portion in the second direction DR2), and the first rear end portion 3e of the transportation plate 3 is an end portion on the rear in the moving direction (in other words, an end portion opposite to the second direction DR2).

As illustrated in FIG. 27, the transportation plate 3 includes: the transportation surface 3u; and the back surface 3n. The transportation surface 3u is a surface that supports the dross when transporting the dross. The back surface 3n is a surface at an opposite end of the transportation surface 3u, in the transportation plate 3.

As illustrated in FIG. 27, the transportation plate 3 includes: a left end portion 3a; and a right end portion 3b. The left end portion 3a of the transportation plate 3 is an end portion on the left when the transportation surface 3u of the transportation plate 3 is viewed in a direction from the first rear end portion 3e toward the first front end portion 3f, and the right end portion 3b of the transportation plate 3 is an end portion on the right when the transportation surface 3u of the transportation plate 3 is viewed in the direction from the first rear end portion 3e toward the first front end portion 3f.

In the example illustrated in FIG. 27, the first front end portion 3f of the transportation plate 3 includes a convex-shaped curved portion 31f, which extends in the first direction DR1, and which is convex in the third direction DR3. The first front end portion 3f of the transportation plate 3 also includes the convex-shaped transportation surface RU1, which extends in the first direction DR1. The convex-shaped transportation surface RU1 is a surface at an end of the convex-shaped curved portion 31f in the third direction DR3. In the example illustrated in FIG. 27, the convex-shaped transportation surface RU1 is a surface that is convex in the third direction DR3 (more specifically, a curved surface that is convex in the third direction DR3), and constitutes a part of the transportation surface 3u of the transportation plate 3.

In the example illustrated in FIG. 27, the first rear end portion 3e of the model plate 9 includes a first upright portion 33e, which extends in the first direction DR1, and which protrudes in the third direction DR3.

In the example illustrated in FIG. 27, the front end of the first middle portion 3m of the transportation plate 3 is connected with the first front end portion 3f (more specifically, the convex-shaped curved portion 31f) through a first bent portion 34, which extends in the first direction DR1. In addition, the rear end of the first middle portion 3m is connected with the first rear end portion 3e (more specifically, the first upright portion 33e) through a second bent portion 35, which extends in the first direction DR1.

In the example illustrated in FIG. 27, the first middle portion 3m includes the first flat portion 36m. The first middle portion 3m also includes the flat transportation surface RF1, which extends in the first direction DR1. The flat transportation surface RF1 is a surface at an end of the first flat portion 36m in the third direction DR3. The flat transportation surface RF1 constitutes a part of the transportation surface 3u of the transportation plate 3.

In the example illustrated in FIG. 28, the first front end portion 3f of the transportation plate 3 includes a plurality of front reception portions 32f, which receive a rod (more specifically, a plurality of through hole portions into which a rod is inserted). The first front end portion 3f of the transportation plate 3 also includes the convex-shaped transportation surface RU1, which extends in the first direction DR1. The convex-shaped transportation surface RU1 is a surface at an end of the first front end portion 3f of the transportation plate 3 in the third direction DR3. In the example illustrated in FIG. 28, the convex-shaped transportation surface RU1 is a surface that is convex in the third direction DR3 (more specifically, a curved surface that is convex in the third direction DR3), and constitutes a part of the transportation surfaces 3u of the transportation plate 3.

In the example illustrated in FIG. 28, the first rear end portion 3e of the transportation plate 3 includes a plurality of rear reception portions 34e, which receive another rod (more specifically, a plurality of through holes into which another rod is inserted). The first rear end portion 3e of the transportation plate 3 also includes a second convex-shaped transportation surface RU2, which extends in the first direction DR1. The second convex-shaped transportation surface RU2 is a surface at an end of the first rear end portion 3e of the transportation plate 3 in the third direction DR3. In the example illustrated in FIG. 28, the second convex-shaped transportation surface RU2 is a curved surface that is convex in the third direction DR3, and constitutes a part of the transportation surface 3u of the transportation plate 3.

In the example illustrated in FIG. 28, the first middle portion 3m of the transportation plate 3 includes the first flat portion 36m. The first middle portion 3m also includes the flat transportation surface RF1, which extends in the first direction DR1. The flat transportation surface RF1 is a surface at an end of the first flat portion 36m in the third direction DR3. The flat transportation surface RF1 constitutes a part of the transportation surface 3u of the transportation plate 3.

In the example illustrated in FIG. 31 and FIG. 32, the first middle portion 3m includes the first concave portion Q1. The presence of the first concave portion Q1 reduces the area of the flat transportation surface RF1. In the example illustrated in FIG. 31 and FIG. 32, the first concave portion Q1 is recessed in the fourth direction DR4. In addition, the first concave portion Q1 extends in the first direction DR1.

In the example illustrated in FIG. 27 to FIG. 30, the transportation plate 3 includes: the base 30; and the protection component 38, which is attached to the base 30. The base 30 includes: the above-described first front end portion 3f, the above-described first middle portion 3m, and the above-described first rear end portion 3e. The base 30 is made of, for example, steel (more specifically, a hot-rolled soft steel plate, a cold-rolled steel plate, or a cold-rolled stainless steel plate). Since the protection component 38 has already been described, the repeated description of the protection component 38 will be omitted. It is to be noted that the protection component 38 is made of, for example, steel (more specifically, a hot-rolled soft steel plate, a cold-rolled steel plate, or a cold-rolled stainless steel plate).

In the example illustrated in FIG. 33 and FIG. 34, the transportation plate 3 includes: the base 30; and the laser beam reflection layer 4r, which is disposed on the base 30 so as to cover at least a part of the surface at an end of the base 30 in the third direction DR3. Since the base 30 and the laser beam reflection layer 4r have already been described, the repeated description of these configurations will be omitted.

In the example illustrated in FIG. 35, the transportation plate 3 includes: the base 30; and the heat conduction layer 4c, which is disposed on the base 30 so as to cover at least a part of the surface at an end of the base 30 in the fourth direction DR4. Since the base 30 and the heat conduction layer 4c have already been described, the repeated description of these configurations will be omitted.

In the example illustrated in FIG. 36, the transportation plate 3 includes: the base 30; and the heat dissipation member 40, which is disposed in contact with at least a part of the surface at an end of the base 30 in the fourth direction DR4. Since the base 30 and the heat dissipation member 40 have already been described, repeated description of these configurations will be omitted.

The length of the transportation plate 3 (more specifically, the length in the direction along the first direction DR1 of the transportation plate 3) is, for example, equal to or longer than one meter and equal to or shorter than three meters.

The width of the transportation plate 3 (more specifically, the width in the direction along the second direction DR2 of the transportation plates 3) is, for example, equal to or larger than 40 millimeters and equal to or smaller than 200 millimeters.

The plate thickness of the transportation plate 3 (for example, the plate thickness of the first middle portion 3m of the transportation plate 3) is, for example, equal to or smaller than 10 millimeters, equal to or smaller than five millimeters, or equal to or smaller than three millimeters.

In the example illustrated in FIG. 27, the plate thickness of the first front end portion 3f of the base 30 is substantially constant, and the plate thickness of the first rear end portion 3e of the base 30 is substantially constant. The plate thickness of the first middle portion 3m of the base 30 is also substantially constant. In the example illustrated in FIG. 27, the plate thickness of the base 30 is substantially constant as a whole.

### (Second Embodiment)

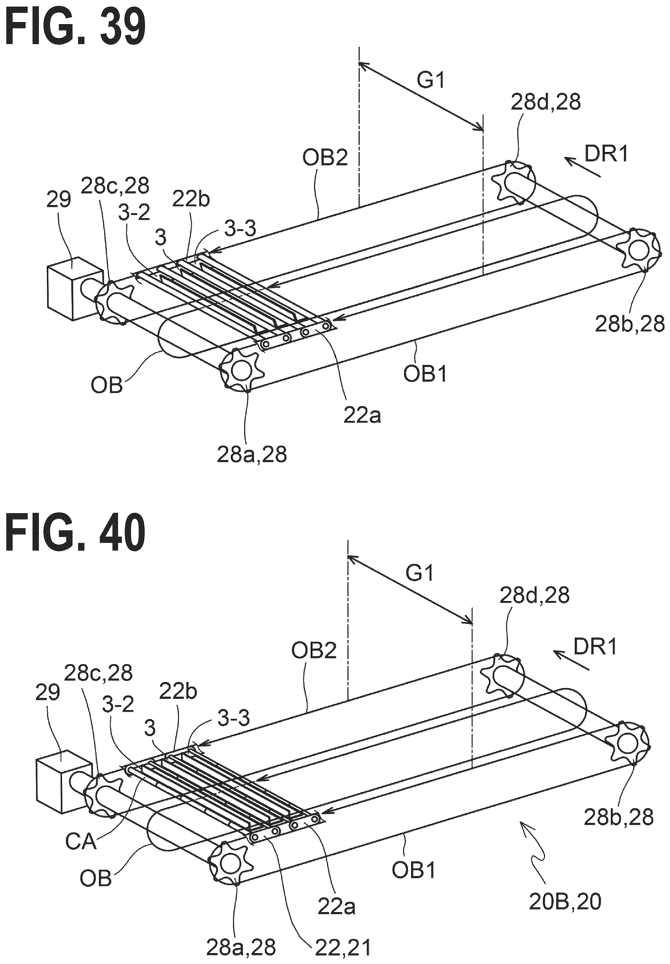

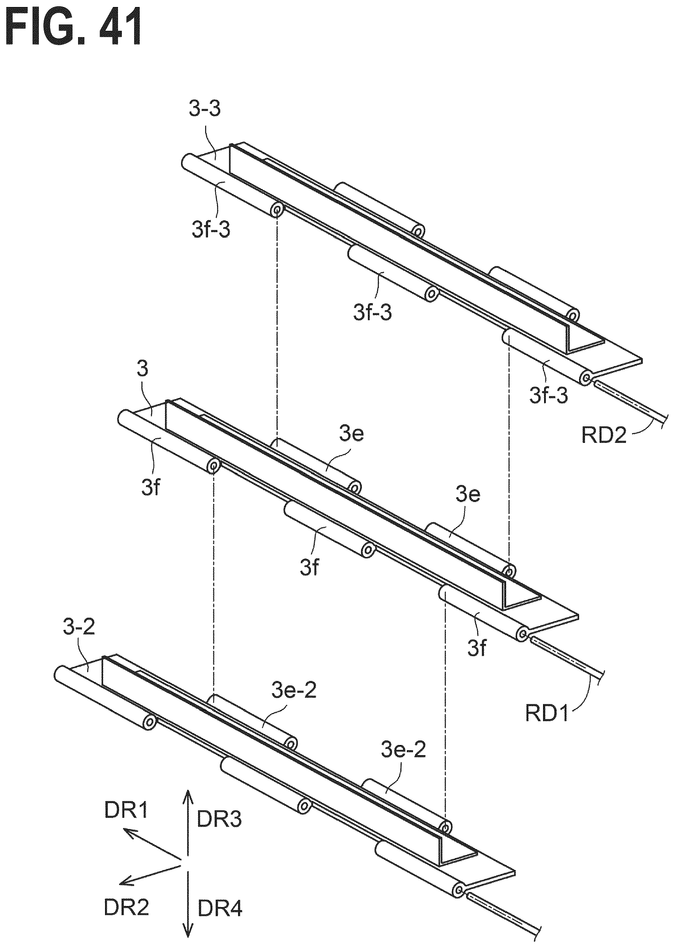

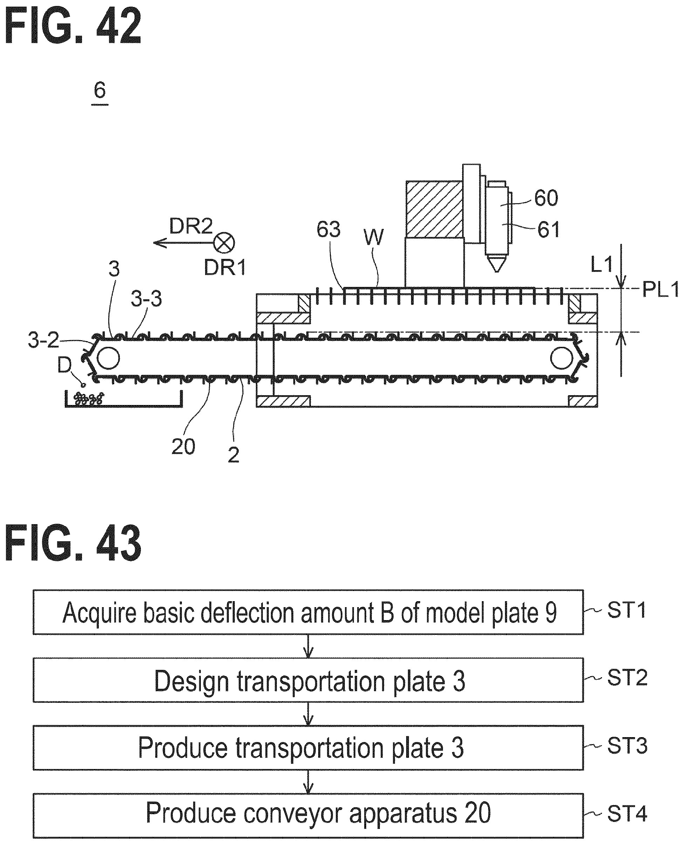

Referring to FIGs. 1 to 43, a method for producing a dross transportation conveyor will be described. FIG. 37 is a schematic perspective view of an example of a dross transportation conveyor 2 that has been produced, schematically illustrating the example. FIG. 38 is a schematic cross-sectional view of a part of a transportation body CA, schematically illustrating the part. FIG. 39 is a schematic perspective view of a state in which a group of transportation plates including the transportation plate 3 and a second transportation plate 3-2 is movable along a circling orbit OB, schematically illustrating the state. FIG. 40 is a schematic perspective view of a state in which a plurality of transportation plates (3, 3-2, 3-3), which are hinge-coupled to each other, are movable along the circling orbit OB, schematically illustrating the state. FIG. 41 is an exploded perspective view of a part of the transportation body CA, schematically illustrating the part. FIG. 42 is a schematic cross-sectional view of a state in which the conveyor apparatus 20 is incorporated in the laser beam machine apparatus 6, schematically illustrating the state. FIG. 43 is a flowchart of an example of a method for producing the dross transportation conveyor according to the second embodiment.

In the second embodiment, differences from the first embodiment will be mainly described. On the other hand, in the second embodiment, repeated description of the matters that have been described in the first embodiment will be omitted. Therefore, it is needless to say that the matters that have been described in the first embodiment are applicable in the second embodiment, even though they are not explicitly described in the second embodiment. On the contrary, all matters to be described in the second embodiment are applicable in the first embodiment.

The method for producing a dross transport conveyor according to the second embodiment includes the "deflection amount acquisition process (the first step ST1)" and the "design process (the second step ST2)" that have been described in the first embodiment. Since the deflection amount acquisition process (the first step ST1) and the design process (the second step ST2) have been described, repeated description of these processes will be omitted.

In a third step ST3, the transportation plate 3 that has been designed by performing the design process (the second step ST2) is produced. The third step ST3 is a transportation plate production process. Since the designed transportation plate 3 has been described in the first embodiment, the repeated description of the designed transportation plate 3 will be omitted. The transportation plate production process (the third step ST3) may include, for example, cutting a steel plate and/or bending the steel plate to obtain the designed shape of the transportation plate 3.

As illustrated in FIG. 27 to FIG. 30, in a case where the designed transportation plate 3 includes the base 30 and the protection component 38, the transportation plate production process (the third step ST3) includes attaching the protection component 38 to the base 30. The protection component 38 is attached to the base 30, for example, by welding or via a fixing member such as a bolt. The transportation plate production process (the third step ST3) may include disposing a laser beam reflection layer on at least a part of the surface at an end of the protection component 38 in the third direction DR3.

As illustrated in FIG. 33 and FIG. 34, in a case where the designed transportation plate 3 includes the base 30 and the laser beam reflection layer 4r, the transportation plate production process (the third step ST3) includes disposing the laser beam reflection layer 4r on at least a part of the surface at an end of the base 30 in the third direction DR3. The transportation plate production process (the third step ST3) may include plating the laser beam reflection layer 4r on at least a part of the surface at an end of the bases 30 in the third direction DR3.

As illustrated in FIG. 35, in a case where the designed transportation plate 3 includes the base 30 and the heat conduction layer 4c, the transportation plate production process (the third step ST3) includes disposing the heat conduction layer 4c on at least a part of the surface at an end of the base 30 in the fourth direction DR4. The transportation plate production process (the third step ST3) may include plating the heat conduction layer 4c on at least a part of the surface at an end of the base 30 in the fourth direction DR4.

As illustrated in FIG. 36, in a case where the designed transportation plate 3 includes the base 30 and the heat dissipation member 40, the transportation plate production process (the third step ST3) includes attaching the heat dissipation member 40 to the base 30. The heat dissipation member 40 is attached to the base 30 by, for example, welding or via a fixing member such as a bolt.

In a fourth step ST4, the conveyor apparatus 20 is produced. The fourth step ST4 is a production process of a conveyor apparatus. In the production process of the conveyor apparatus (the fourth step ST4), the conveyor apparatus 20 (in other words, the dross transportation conveyor 2) is produced, including a transportation body CA in which a group of transportation plates including the above-described transportation plate 3 is assembled together. In an example illustrated in FIG. 37, the conveyor apparatus 20 includes the transportation body CA and a driver 29, which moves the transportation body CA along a circling orbit.

In the example illustrated in FIG. 37, the group of transportation plates includes the above-described transportation plate 3, a second transportation plate 3-2, and a third transportation plate 3-3. In addition, the transportation body CA includes a group of transportation plates (3, 3-2, 3-3) and an endless component 21 (more specifically, an endless chain 22) to which the group of transportation plates is attached. The shape and structure of the second transportation plate 3-2 may be substantially identical to the shape and structure of the transportation plate 3. Alternatively, the shape and structure of the second transportation plate 3-2 may be different in detail from the shape and structure of the transportation plate 3. The shape and structure of the third transportation plate 3-3 may be substantially identical to the shape and structure of the transportation plate 3. Alternatively, the shape and structure of the third transportation plate 3-3 may be different in detail from the shape and structure of the transportation plate 3.

In an example illustrated in FIG. 38, the production process (the fourth step ST4) of the conveyor apparatus includes attaching the transportation plate 3 to the endless component 21 (more specifically, the endless chain 22) so that the first front end portion 3f of the transportation plate 3 and a rear end portion 3e-2 of the second transportation plate 3-2 overlap each other and the first rear end portion 3e of the transportation plate 3 and a front end portion 3f-3 of the third transportation plate 3-3 overlap each other. In the example illustrated in FIG. 38, the transportation plate 3 is attached to the endless component 21 (more specifically, the endless chain 22) via a bolt BT.

In the example illustrated in FIG. 38, in the transportation body CA in which the group of transportation plates is assembled, the first front end portion 3f of the transportation plate 3 covers the rear end portion 3e-2 of the second transportation plate 3-2, and the front end portion 3f-3 of the third transportation plate 3-3 covers the first rear end portion 3e of the transportation plate 3.

In the example illustrated in FIG. 37, a conveyor apparatus 20A, which has been produced by performing the production process (the fourth step ST4) of the conveyor apparatus includes the transportation body CA, a plurality of sprockets 28, and the driver 29.

The transportation body CA includes: the group of transportation plates including the transportation plate 3, the second transportation plate 3-2, the third transportation plate 3-3; and a first endless chain 22a and a second endless chain 22b. The first endless chain 22a and the second endless chain 22b support the group of transportation plates. In the example illustrated in FIG. 37, each transportation plate in the group of transportation plates is attached to the first endless chain 22a and the second endless chain 22b.

In an example illustrated in FIG. 39, the first endless chain 22a and the second endless chain 22b are directly or indirectly driven by the driver 29. More specifically, the first endless chain 22a is directly or indirectly driven by the driver 29 so as to advance along a first circling orbit OB1, and the second endless chain 22b is directly or indirectly driven by the driver 29 so as to advance along a second circling orbit OB2, which is parallel to the first circling orbit OB1. A gap G1 between the first circling orbit OB1 and the second circling orbit OB2 (in other words, a distance between the first circling orbit OB1 and the second circling orbit OB2 in the direction along the first direction DR1) is, for example, equal to or longer than one meter and equal to or shorter than three meters.

In an example illustrated in FIG. 39, the plurality of sprockets 28 include a first sprocket 28a, a second sprocket 28b, a third sprocket 28c, and a fourth sprocket 28d. The first endless chain 22a engages with at least the first sprocket 28a and the second sprocket 28b (more specifically, the first endless chain 22a is wound around at least the first sprocket 28a and the second sprocket 28b). In addition, the second endless chain 22b engages with at least the third sprocket 28c and the fourth sprocket 28d (more specifically, the second endless chain 22b is wound around at least the third sprocket 28c and the fourth sprocket 28d).

In the example illustrated in FIG. 39, the first endless chain 22a is driven by the driver 29 via at least the first sprocket 28a, and the second endless chain 22b is driven by the driver 29 via at least the third sprocket 28c.

The group of transportation plates moves along the circling orbit OB. As illustrated in FIG. 39, the circling orbit OB of the group of transportation plates is parallel to the first circling orbit OB1 of the first endless chain 22a, and is parallel to the second circling orbit OB2 of the second endless chain 22b.

A conveyor apparatus 20B, which is illustrated in to FIG. 40 and FIG. 41, is different from the conveyor apparatus 20A, which is illustrated in FIG. 37 to FIG. 39, in that each transportation plate in the group of transportation plates is hinged with another transportation plate.

In an example illustrated in FIG. 40, the group of transportation plates includes the above-described transportation plate 3, the second transportation plate 3-2, and the third transportation plate 3-3. In addition, the transportation body CA includes: the group of transportation plates (3, 3-2, 3-3); and the endless component 21 (more specifically, the endless chain 22) to which the group of transportation plates is attached. The shape and structure of the second transportation plate 3-2 may be substantially identical to the shape and structure of the transportation plate 3. Alternatively, the shape and structure of the second transportation plate 3-2 may be different in detail from the shape and structure of the transportation plate 3. The shape and structure of the third transportation plate 3-3 may be substantially identical to the shape and structure of the transportation plate 3. Alternatively, the shape and structure of the third transportation plate 3-3 may be different in detail from the shape and structure of the transportation plate 3.

As illustrated in FIG. 41, the production process of the conveyor apparatus (the fourth step ST4) includes: hinge-coupling the first front end portion 3f of the transportation plate 3 to the rear end portion 3e-2 of the second transportation plate 3-2; and hinge-coupling the first rear end portion 3e of the transportation plate 3 to the front end portion 3f-3 of the third transportation plate 3-3.

In an example illustrated in FIG. 41, a first rod RD1 is disposed to pass through both the first front end portion 3f of the transportation plate 3 and the rear end portion 3e-2 of the second transportation plate 3-2, and thus the first front end portion 3f of the transportation plate 3 and the rear end portion 3e-2 of the second transportation plate 3-2 are hinged-coupled to each other. In addition, a second rod RD2 is disposed to pass through both the first rear end portion 3e of the transportation plate 3 and the front end portion 3f-3 of the third transportation plate 3-3, and thus the first rear end portion 3e of the transportation plate 3 and the front end portion 3f-3 of the third transportation plate 3-3 are hinge-coupled to each other.

As illustrated in FIG. 40, the production process of the conveyor apparatus (the fourth step ST4) may include attaching the transportation plate 3, the second transportation plate 3-2, and the third transportation plate 3-3 to the endless component 21 (more specifically, the endless chain 22).

In the example illustrated in FIG. 40, the conveyor apparatus 20B, which has been produced by performing the production process (the fourth step ST4) of the conveyor apparatus, includes: the transportation body CA; the plurality of sprockets 28; and the driver 29.

The transportation body CA includes: the group of transportation plates including the transportation plate 3, the second transportation plate 3-2, the third transportation plate 3-3; and the first endless chain 22a and the second endless chain 22b. The first endless chain 22a and the second endless chain 22b support the group of transportation plates. In the example illustrated in FIG. 40, the group of transportation plates is attached to the first endless chain 22a and the second endless chain 22b.

Since the first endless chain 22a, the second endless chain 22b, the plurality of sprockets 28, and the driver 29 have already been described, repeated description of these configurations will be omitted.

As illustrated in FIG. 42, the production process of the conveyor apparatus (the fourth step ST4) may include incorporating the conveyor apparatus 20 into the laser beam machine apparatus 6 so that the group of transportation plates including the transportation plate 3, the second transportation plate 3-2, and the third transportation plate 3-3 traverses a region immediately below a laser head 61 of the laser beam machine apparatus 6. In this case, a workpiece W (for example, a plate-shaped workpiece) is machined by the laser beam LB, which is emitted from the laser head 61, and the laser beam LB passing through the workpiece W partially reaches the transportation plate 3.

The amount of thermal deformation of the model plate 9 due to the laser beam irradiation is not a large amount. However, if the compressive plastic strain due to thermal deformation is accumulated in the model plate 9, smooth movement of the model plate 9 may be hindered. On the other hand, according to the first embodiment or the second embodiment, the transportation plate 3 is designed to reduce the amount of thermal deformation or the amount of compressive plastic strain due to the laser beam irradiation. Therefore, even though the laser beam LB passing through the workpiece W partially reaches the transportation plate 3, the smooth movement of the transportation plate 3 is not hindered. In particular, in the case where the conveyor apparatus 20 according to the second embodiment is incorporated into the laser beam machine apparatus 6, the laser beam output of which is increased, the conveyor apparatus 20 largely contributes to smooth transportation of the dross.

Herein, a workpiece support plane PL1 is defined as a plane that is parallel to a horizontal plane and that passes through a lowermost end of the workpiece W, which is supported by a workpiece support member 63 of the laser beam machine apparatus 6 (see FIG. 42).

According to the first embodiment or the second embodiment, the transportation plate 3 is designed to reduce the amount of thermal deformation or the amount of compressive plastic strain due to the laser beam irradiation. Therefore, it becomes possible to further reduce a distance L1 between the workpiece support plane PL1 and the circling orbit OB of the group of transportation plates. The distance L1 between the workpiece support plane PL1 and the circling orbit OB of the group of transportation plates is, for example, equal to or shorter than one meter, equal to or shorter than 0. 9 meters, or equal to or shorter than 0. 8 meters. The distance L1 is smaller, and thus it becomes possible to reduce a height dimension of the laser beam machine apparatus 6.

The present invention is not limited to the above-described embodiments or modifications, and it is apparent that the embodiments or modifications can be appropriately modified or changed within the scope of the technical idea of the present invention. In addition, various techniques used in each embodiment or each modification are applicable to other embodiments or other modifications as long as a technical contradiction does not occur. Further, any additional configuration in each embodiment or each modification can be omitted as appropriate.

### Reference Signs List

2 ... Dross transportation conveyor, 3 ... Transportation plate, 3-2 ... Second transportation plate, 3-3 ... Third transportation plate, 3a ... Left end portion of transportation plate, 3b ... Right end portion of transportation plate, 3e ... First rear end portion, 3e-2 ... Rear end portion, 3f ... First front end portion, 3f-3 ... Front end portion, 3m ... First middle portion, 3n ... Back surface of transportation plate, 3u ... Transportation surface of transportation plate, 4 ... Temperature rise prevention surface, 4c ... Heat conduction layer, 4r ... Laser beam reflection layer, 6 ... Laser beam machine apparatus, 9 ... Model plate, 9-1 ... First model plate, 9-2 ... Second model plate, 9a ... Left end portion of model plate, 9b ... Right end portion of model plate, 9e ... Rear end portion of model plate, 9f ... Front end portion of model plate, 9m ... Middle portion of model plate, 9n ... Back surface of model plate, 9u ... Transportation surface of model plate, 12 ... Dross transportation conveyor, 13 ... Transportation plate, 13-1 ... First transportation plate, 13-2 ... Second transportation plate, 20, 20A, 20B ... Conveyor apparatus, 21 ... Endless component, 22a ... Furst endless chain, 22b ... Second endless chain, 28 ... Sprocket, 28a ... First sprocket, 28b ... Second sprocket, 28c ... Third sprocket, 28d ... Fourth sprocket, 29 ... Driver, 30 ... Base, 31f ... Convex-shaped curved portion, 32f ... Front reception portion, 33e ... First upright portion, 34 ... First bent portion, 34e ... Rear reception portion, 35 ... Second bent portion, 36m ... First flat portion, 38 ... Protection component, 38a ... First protection component, 38b ... Heat insulation material, 38r ... Surface of laser beam reflection layer, 40 ... Heat dissipation member, 41 ... Heat sink, 42 ... Heat dissipation piece, 42p ... Heat dissipation pin, 60 ... Laser beam irradiator, 61 ... Laser head, 63 ... Workpiece support member, 81 ... Computer, 91f ... Convex-shaped curved portion, 92f ... Front reception portion, 93e ... Upright portion, 94 ... First bent portion, 94e ... Rear reception portion, 95 ... Second bent portion, 96m ... Flat portion, 381 ... First plate portion, 382 ... Second plate portion, 383 ... Bent portion, A1 ... First deflection, A2 ... Second deflection, B ... Basic deflection amount, BB1 ... Bent portion, BT ... Bolt, C ... First deflection amount, CA ... Transportation body, CF ... Cut-off piece, D ... Dross, DA1 ... First data, DA2 ... Second data, DA3 ... Third data, DA4 ... Fourth data, DR1 ... First direction, DR2 ... Second direction, DR3 ... Third direction, DR4 ... Fourth direction, DT1, DT2, DT3, DT4 ... Data, E3 ... Third deflection, E4 ... Fourth deflection, G1 ... Gap, HD ... Laser head, LB ... Laser, LB1 ... First laser, MF1 ... Flat transportation surface, MU1 ... Convex-shaped transportation surface, MU2 ... Second convex-shaped transportation surface, OB ... Circling orbit, OB1 ... First circling orbit, OB2 ... Second circling orbit, PL1 ... Workpiece support plane, Q1 ... First concave portion, RD1 ... First rod, RD2 ... Second rod, RF1 ... Flat transportation surface, RU1 ... Convex-shaped transportation surface, RU2 ... Second convex-shaped transportation surface, W ... Workpiece

## Claims

1. A method for designing a transportation plate for transporting dross, the method comprising the steps of:
acquiring a basic deflection amount, in a case where a model plate is defined as a basic model of the transportation plate that transports the dross generated by irradiation of a laser beam on a workpiece from a laser beam machine apparatus and the basic deflection amount is defined as an amount of deflection of the model plate, the deflection occurring due to irradiation of a first laser beam on the model plate; and
designing the transportation plate based on the model plate for a first deflection amount to be smaller than the basic deflection amount, in a case where the first deflection amount is defined as an amount of deflection of the transportation plate, the deflection occurring due to the irradiation of the first laser beam on the transportation plate under a substantially identical condition to a condition for the irradiation of the first laser beam on the model plate.

2. The method for designing the transportation plate for transporting the dross according to claim 1,
wherein the basic deflection amount denotes the amount of the deflection of the model plate, the deflection being due to compressive plastic strain of the model plate, and
wherein the first deflection amount denotes the amount of the deflection of the transportation plate, the deflection being due to compressive plastic strain of the transportation plate.

3. The method for designing the transportation plate for transporting the dross according to claim 1 or 2,
wherein the step of acquiring the basic deflection amount comprises:
actually irradiating the model plate with the first laser beam; and
actually measuring the amount of the deflection of the model plate, the deflection occurring due to the irradiation of the first laser beam on the model plate.

4. The method for designing the transportation plate for transporting the dross according to claim 1 or 2,
wherein the step of acquiring the basic deflection amount comprises acquiring the basic deflection amount through simulation using a computer.

5. The method for designing the transportation plate for transporting the dross according to one of claims 1 to 4,
wherein the step of acquiring the basic deflection amount comprises:
acquiring data indicating first deflection of the model plate, the first deflection occurring due to the irradiation of the first laser beam on a first portion of the model plate; and
determining the basic deflection amount in which at least the data indicating the first deflection is reflected, and
wherein the step of designing the transportation plate based on the model plate comprises:
acquiring data indicating third deflection of the transportation plate, the third deflection occurring due to the irradiation of the first laser beam on a third portion of the transportation plate, the third portion positionally corresponding to the first portion of the model plate;
determining the first deflection amount in which at least the data indicating the third deflection is reflected; and
confirming that a condition that the first deflection amount is smaller than the basic deflection amount is satisfied.

6. The method for designing the transportation plate for transporting the dross according to one of claims 1 to 4,
wherein the irradiation of the first laser beam on the model plate comprises:
irradiating a first portion of the model plate with the first laser beam; and
irradiating a second portion of the model plate with the first laser beam.

7. The method for designing the transportation plate for transporting the dross according to one of claims 1 to 4,
wherein the step of acquiring the basic deflection amount comprises:
acquiring, as first data, data corresponding to compressive plastic strain of the model plate, the compressive plastic strain occurring due to the irradiation of the first laser beam on a first portion of the model plate;
acquiring, as second data, data corresponding to compressive plastic strain of the model plate, the compressive plastic strain occurring due to the irradiation of the first laser beam on a second portion of the model plate; and
determining the basic deflection amount in which at least the first data and the second data are reflected.

8. The method for designing the transportation plate for transporting the dross according to claim 6 or 7,
wherein the second portion is a front end portion of the model plate, and
wherein the first portion is a middle portion of the model plate.

9. The method for designing the transportation plate for transporting the dross according to one of claims 6 to 8,
wherein the step of designing the transportation plate based on the model plate comprises:
acquiring, as third data, data indicating third deflection of the transportation plate, the third deflection occurring due to the irradiation of the first laser beam on a third portion of the transportation plate, the third portion positionally corresponding to the first portion of the model plate;
acquiring, as fourth data, data indicating fourth deflection of the transportation plate, the fourth deflection occurring due to the irradiation of the first laser beam on a fourth portion of the transportation plate, the fourth portion positionally corresponding to the second portion of the model plate; and
determining the first deflection amount in which at least the third data and the fourth data are reflected; and
confirming that a condition that the first deflection amount is smaller than the basic deflection amount is satisfied.

10. The method for designing the transportation plate for transporting the dross according to claim 1,
wherein the basic deflection amount denotes the amount of the deflection of the model plate, the deflection being due to thermal expansion of the model plate; and
wherein the first deflection amount denotes the amount of the deflection of the transportation plate, the deflection being due to thermal expansion of the transportation plate.

11. The method for designing the transportation plate for transporting the dross according to claim 1,
wherein the step of acquiring the basic deflection amount comprises:
acquiring, as first data, data corresponding to thermal expansion of the model plate, the thermal expansion occurring due to the irradiation of the first laser beam on a first portion of the model plate;
acquiring, as second data, data corresponding to thermal expansion of the model plate, the thermal expansion occurring due to the irradiation of the first laser beam on a second portion of the model plate; and
determining the basic deflection amount in which at least the first data and the second data are reflected.

12. The method for designing the transportation plate for transporting the dross according to one of claims 1 to 11,
wherein the step of designing the transportation plate based on the model plate comprises designing the transportation plate by adding, to the model plate, a protection component that covers at least a part of a transportation surface of the model plate.

13. The method for designing the transportation plate for transporting the dross according to one of claims 1 to 12,
wherein the step of designing the transportation plate based on the model plate comprises designing the transportation plate by changing a shape of the model plate itself.

14. The method for designing the transportation plate for transporting the dross according to one of claims 1 to 13,
wherein the step of designing the transportation plate based on the model plate comprises designing the transportation plate by covering at least a part of a surface of the model plate with a temperature rise prevention surface.

15. A method for producing a dross transportation conveyor, the method comprising the steps of:
acquiring a basic deflection amount, in a case where a model plate is defined as a basic model of the transportation plate that transports the dross generated by irradiation of a laser beam on a workpiece from a laser beam machine apparatus and the basic deflection amount is defined as an amount of deflection of the model plate, the deflection occurring due to irradiation of a first laser beam on the model plate;
designing the transportation plate based on the model plate for a first deflection amount to be smaller than the basic deflection amount, in a case where the first deflection amount is defined as an amount of deflection of the transportation plate, the deflection occurring due to the irradiation of the first laser beam on the transportation plate under a substantially identical condition to a condition for the irradiation of the first laser beam on the model plate;
producing the transportation plate that has been designed; and
producing a conveyor apparatus comprising a transportation body in which a group of transportation plates comprising the transportation plate is assembled together.
